(19) Europäisches Patentamt
European Patent Office
Office européen des brevets

(11) **EP 3 899 424 B1**

(12) **EUROPÄISCHE PATENTSCHRIFT**

(45) Veröffentlichungstag und Bekanntmachung des Hinweises auf die Patenterteilung:
**11.05.2022 Patentblatt 2022/19**

(21) Anmeldenummer: **19836488.7**

(22) Anmeldetag: **19.12.2019**

(51) Internationale Patentklassifikation (IPC):
**G01B 11/25** (2006.01) **G02C 13/00** (2006.01)

(52) Gemeinsame Patentklassifikation (CPC):
**G01B 11/25; G02C 13/005**

(86) Internationale Anmeldenummer:
**PCT/EP2019/086338**

(87) Internationale Veröffentlichungsnummer:
**WO 2020/127758 (25.06.2020 Gazette 2020/26)**

(54) **VORRICHTUNG UND VERFAHREN ZUR OPTISCHEN VERMESSUNG EINER INNENKONTUR EINER BRILLENFASSUNG**

DEVICE AND METHOD FOR OPTICAL MEASUREMENT OF AN INTERNAL CONTOUR OF A SPECTACLE FRAME

DISPOSITIF ET PROCÉDÉ DE MESURE OPTIQUE D'UN CONTOUR INTÉRIEUR D'UNE MONTURE DE LUNETTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2018 DE 102018222231**

(43) Veröffentlichungstag der Anmeldung:
**27.10.2021 Patentblatt 2021/43**

(73) Patentinhaber: **Carl Zeiss Vision International GmbH**
**73430 Aalen (DE)**

(72) Erfinder:
• **MESCHENMOSER, Ralf**
**73457 Essingen (DE)**
• **PAUKER, Friedrich**
**86420 Diedorf (DE)**

(74) Vertreter: **Altmann Stößel Dick Patentanwälte PartG mbB**
**Theodor-Heuss-Anlage 2**
**68165 Mannheim (DE)**

(56) Entgegenhaltungen:
WO-A1-2019/026416    DE-A1- 10 049 382
DE-A1- 19 721 688    DE-A1- 19 727 226

• **SMEETS J P C ET AL: "Contactless power transfer to a rotating disk", INDUSTRIAL ELECTRONICS (ISIE), 2010 IEEE INTERNATIONAL SYMPOSIUM ON, IEEE, PISCATAWAY, NJ, USA, 4. Juli 2010 (2010-07-04), Seiten 748-753, XP031803053, ISBN: 978-1-4244-6390-9**

**Beschreibung**

Gebiet der Erfindung

Die vorliegende Erfindung betrifft eine Vorrichtung und ein Verfahren zur optischen Vermessung einer Innenkontur einer Brillenfassung, ein System zur optischen Vermessung einer Brille sowie ein Verfahren zur Herstellung einer Brille.

Stand der Technik

Aus dem Stand der Technik sind Vorrichtungen und Verfahren zur Vermessung einer Innenkontur einer Brillenfassung bekannt. Hierbei werden insbesondere Form und Profil einer Innenkontur eines Brillenfassungsrahmens, beispielsweise einer in einer Öffnung eines Brillengestells umlaufenden Nut, erfasst.

Hierzu kann insbesondere ein sogenannter Messtaster oder Tracer verwendet werden. Dazu wird in der Regel die Brillenfassung in eine meist prismatische Spannvorrichtung des Messtasters eingespannt. Hieran anschließend wird eine taktile Spitze meist als Kugel mit einem Durchmesser von ca. 1 mm in eine innere Vertiefung des Profils der Brillenfassung eingefahren. Die taktile Spitze befindet sich auf einer drehbaren Plattform und kann um 360° gedreht werden. Dabei liegt die taktile Spitze durch eine vom Gerät erzeugte Anlegekraft auf dem Profilgrund der Brillenfassung. Entsprechend der Form der Brillenfassung kann die taktile Spitze neben der Rotation auch eine radiale Bewegung ausführen. Die gleichzeitige Ermittlung eines Rotationswinkels und einer radialen Auslenkung stellt einen Satz von Polarkoordinaten bereit, welche eine Kontur einer Ebene beschreiben können. Bei rechteckigen Profilen kann sich die Messkugel innerhalb des Profils orthogonal zum Radius und zur Brillenkontur bewegen, was häufig zu Messfehlern führt.

Weiterhin sind Verfahren bekannt, welche Kontur und Form des Brillenglases ermitteln, wofür ein Schattenwurf der Brillenfassung oder einer Stützscheibe erzeugt wird. Durch eine optische 2D-Projektion kann mittels einer kalibrierten Sensorik und Abbildungsoptik die Kontur ermittelt werden. Nachteilig hieran ist, dass hierbei nur der Umriss, nicht aber die Kontur der Berandung erfasst werden kann.

Die Erfassung der Fassungsformdaten einer Brillenfassung oder eines Stützglases auf taktilem Wege mittels des Messtasters oder optisch in Form der 2D-Projektion bewirkt Messungenauigkeiten von mindestens 10%. In Folge dieser Messungenauigkeiten kann ein formgerandetes Brillenglas oft nicht spannungsfrei in die Brillenfassung eingefügt werden und muss manuell nachgearbeitet werden. Das manuelle Einpassen der Gläser in die Brillenfassung ist jedoch der aufwändigste und teuerste Arbeitsschritt bei der Herstellung einer Brille. Der Tastkopf von Tracern ist üblicherweise so groß, dass er zudem nicht in ein Tal einer Nut eindringen kann. Dieser Nachteil wird mit Vorhalten und ständiger Kalibrierung kompensiert. Dennoch erfordern heutzutage etwa 10 % aller formgerandeten Brillengläser eine Nacharbeitung.

DE 42 24 640 C2 offenbart ein Gerät für eine automatische Messung von Form und Profil einer Innenkontur eines Brillenfassungsrahmens, dessen Profil im Schnitt die Form eines V hat, dessen Mittellinie parallel zur Hauptebene des Brillenfassungsrahmens verläuft. Das Gerät umfasst mindestens einer Lichtquelle, welche ein planparalleles Lichtbündel auf die Innenkontur des Brillenfassungsrahmens richtet, optische Aufzeichnungsmittel für die Strahlen des einfallenden Lichtbündels, die von kennzeichnenden Punkten der Innenkontur des Brillenfassungsrahmens zurückgeworfen werden, wobei die kennzeichnenden Punkte durch jeweils drei Punkte gebildet sind, von denen einer an der Spitze des V und die beiden anderen jeweils an einem Ende des V liegen und diese kennzeichnenden Punkte nacheinander für eine Reihe von Konturabschnitten aufgenommen werden, die winkelig entlang der Innenkontur des Brillenfassungsrahmens verteilt sind, Mittel für die Analyse der aufgenommenen Bilder zur Bestimmung der Raumkoordinaten der kennzeichnenden Punkte, und Rechenmittel für die Berechnung der Form und des Profils der Innenkontur des Brillenfassungsrahmens ausgehend von den Raumkoordinaten.

DE 93 17 381 U1 offenbart eine Vorrichtung zum berührungslosen Abtasten eines Nutgrundes in einer Öffnung eines Brillengestells und Speichern der gewonnenen Werte oder unmittelbaren Steuern der Bearbeitung eines Brillenglasrohlings mit Hilfe dieser Werte. Die Vorrichtung umfasst eine das Brillengestell tragende Halterung, einen an der Halterung angeordneten, relativ zur Brillengestellöffnung um eine senkrechte Achse drehbaren Signalgeber für kohärente, zum Nutgrund gerichtete Wellen wie Ultraschallwellen oder Laserstrahlen, einen ersten Messwertaufnehmer für eine relative Winkelstellung der Brillengestellöffnung mit Bezug auf den Signalgeber, einen zweiten Messwertaufnehmer für den Abstand zwischen dem Nutgrund und dem Signalgeber, einen dritten Messwertaufnehmer für eine Höhenlage der Signale mit Bezug auf den Nutgrund, und eine von dem drittem Messwertaufnehmer gesteuerten Nachführeinrichtung für den Signalgeber zum Nachführen des Signalgebers entlang der Raumkurve des Nutgrundes.

DE 199 19 311 C1 offenbart ein Verfahren und eine Vorrichtung zum berührungslosen Abtasten einer Nut in einer Öffnung einer Brillenfassung und/oder des Umfangs eines Brillenglases oder einer Formscheibe und zum Speichern der gewonnenen Werte oder zum unmittelbaren Steuern der Bearbeitung eines Rohglases mit Hilfe dieser Werte. Die Vorrichtung umfasst eine die Brillenfassung, das Brillenglas oder die Formscheibe tragenden Halterung, eine an einem Träger angeordneten, relativ zu der Brillenglasöffnung, dem Brillenglas oder der Formscheibe um dessen Achse drehbaren Lichtquelle, die ein etwa senkrecht zur Brillengestell-, Brillenglas- oder Formscheibenebene stehendes planparalleles Lichtbündel oder ein Netzraster auf die Innenkontur der Brillengestellöffnung oder auf die Außenkontur des Brillenglases oder der Formscheibe richtet, eine in der Ebene senkrecht zur Drehachse an dem Träger beabstandet zur Lichtquelle angeordneten Optik mit einer Sensormatrix zum Aufnehmen des Bildes des Lichtbündels oder des Netzrasters in der Nut der Brillenglasöffnung oder auf dem Umfang des Brillenglases oder der Formscheibe, einen Messwertaufnehmer für die relative Winkeleinstellung der Brillenglasöffnung mit Bezug auf die Achse der Optik oder der Lichtquelle, eine mit der Optik gekoppelte Scharfeinstell- oder Fokussiervorrichtung für das aufgenommene Bild des Lichtbündels oder des Netzrasters, einen mit der Scharfeinstell- oder Fokussiervorrichtung verbundenen Messwertumformer zum Umformen der Scharfeinstellsignale der Scharfeinstell- oder Fokussiervorrichtung in Werte für den Abstand zwischen dem Nutgrund oder dem Umfang des Brillenglases oder der Schablone und der Achse, wobei die Halterung oder der Träger mittels einer Verstelleinrichtung schrittweise in der Ebene senkrecht zur Drehachse verstellbar ist, eine mit der Sensormatrix gekoppelten Einrichtung zum Erfassen der Höhenlage des Bildes der Nut oder des Umfangs des Brillenglases oder der Formscheibe, die ein Maß für den Verlauf der Raumkurve des Nutgrundes oder des Umfangs des Brillenglases oder der Formscheibe in Richtung der Achse liefert, und eine Auswerteeinheit zum Zusammenfassen der Bilder der Nut oder des Umfangs des Brillenglases oder der Formscheibe zu der dreidimensionalen Raumform der Nut oder des Umfangs.

EP 0 671 679 B1 offenbart eine Vorrichtung und ein Verfahren zum berührungslosen Vermessen dreidimensionaler Objekte auf der Basis optischer Triangulation, wobei die von einer Strahlungsquelle in einem kartesischen x-, y-, z-Koordinatensystem in x-Richtung ausgesendete, gebündelte Strahlung die Oberfläche des Objektes punktweise abtastet und von dieser reflektiert wird und die Remission mittels Strahlungsdetektion erfasst wird, und wobei die Strahlungsquelle sowie die Strahlungsdetektoren in einem in z-Richtung vertikal linear bewegbaren sowie verschwenkbaren Abtastkopf befindlich sind.

EP 0 974 038 B1 offenbart eine Messanordnung sowie ein Verfahren zum berührungslosen Erfassen einer 3-dimensionalen Raumform einer in einer Brillenfassung umlaufenden Nut. Die Messanordnung umfasst eine Lichtquelle, deren Lichtstrahl auf die Nut gerichtet ist, ein optischen Abbildungssystem, welches das an der Nut reflektierte Licht auf eine optische Detektoreinheit abbildet und weitgehend zentrisch zu der zu vermessenden Nut der Brillenfassung angeordnet ist, einer die Brillenfassung tragenden Halteeinrichtung, welche relativ zu der Lichtquelle sowie dem optischen Abbildungssystem um eine Zentrierachse einer, von der umlaufenden Nut der Brillenfassung einbeschriebenen Fläche drehbar gelagert ist, sowie eine Auswerteeinheit zur Ermittlung der 3-dimensionalen Raumform der Nut. Die Messanordnung ist dadurch gekennzeichnet, dass die Lichtquelle die Nut mit einem einzigen, linienförmig ausgebildeten Strahl in einem linienförmigen Bereich beleuchtet, dass ein optisches Umlenksystem vorgesehen ist, das den Lichtstrahl von der Lichtquelle derart auf die Nut ablenkt, dass der linienförmige Strahl weitgehend senkrecht auf die von der umlaufenden Nut der Brillenfassung einbeschriebene Fläche gerichtet ist, und dass die Lichtquelle und die Detektoranordnung relativ zu der zu vermessenden Nut einen fest vorgebbaren Triangulationswinkel einschließen, so dass die Anwendung des Lichtschnittverfahrens zur Ermittlung der 3-dimensionalen Raumform der Nut möglich ist. Nachteilig hieran ist, dass wird die Brillenfassung um eine vertikale Achse rotiert wird, um mittels mathematischen Methoden die Kontur der Brillenfassung zu bestimmen. Daher muss die Brille von ihrer linken Seite auf ihre rechte Seite umgespannt werden, wodurch ein Verlust an Information über den Augenabstand einhergeht.

DE 10 2010 010 340 B4 offenbart eine Messanordnung und ein Verfahren zum optischen Vermessen einer Innenseite eines Brillenrahmens eines Brillengestells, der eine einer Brillenglasform entsprechende einbeschriebene Fläche zumindest teilweise begrenzt. Die Vorrichtung umfasst eine Halteeinrichtung zum Lagern des Brillengestells, mindestens eine Lichtquelle zum Erzeugen eines auf einen auszuwertenden Bereich des Brillenrahmens zu projizierenden Lichtstrahls, mindestens einen mit einer Auswerteeinheit koppelbaren Sensor zur Erfassung des reflektierten Lichtstrahls, wobei die Halteeinrichtung um eine Rotationsachse drehbar und in Richtung einer Bewegungsachse verfahrbar ist und die Bewegungsachse zumindest eine Bewegungskomponente in eine Richtung rechtwinklig zur Rotationsachse aufweist. Die Die Vorrichtung ist dadurch gekennzeichnet, dass die Halteeinrichtung zur Fixierung des Brillengestells mit Brillengestellbügeln dient, wobei im Bereich der Halteeinrichtung mindestens ein Freiraum vorgesehen ist, der zur Aufnahme der Brillengestellbügel eines zu haltenden Brillengestells dient, die nicht eingeklappt oder nicht einklappbar sind, wobei der Freiraum auf der der Lichtquelle und/oder dem Sensor abgewandten Seite des Brillenrahmen vorgesehen ist und eine Bewegung des Brillenrahmens in eine Richtung rechtwinklig zur Rotationsachse sowie die Rotation des Brillenrahmens gewährleistet.

DE 10 2011 114 048 B4 offenbart eine Anordnung und ein Verfahren zum optischen Messen einer Brillenfassungsnut. Die Anordnung umfasst eine im Durchlichtverfahren arbeitenden optische Aufnahmeeinheit, welche eine optische Detektoreinheit und ein optisches Abbildungssystem aufweist, eine Halteeinrichtung für eine zu messende Brillenfassung und einen geometrisch und maßlich bekannten Taststift. Die Anordnung ist dadurch gekennzeichnet, dass die zu messende Brillenfassung an der Halteeinrichtung lösbar befestigbar ist, die zu messende Brillenfassung und die optische Aufnahmeeinheit derart zueinander um 90° schwenkbar sind, dass die optische Achse der optischen Aufnahmeeinheit in der einen Schwenkstellung senkrecht zur Frontansicht und in der anderen Schwenkstellung senkrecht zur Seitenansicht der zu messenden Brillenfassung ausgerichtet ist, und dass der Taststift in der Frontansichts-Schwenksteilung im Durchlicht der optischen Aufnahmeeinheit sicht- und messbar ist.

US 2013/0050712 A1 offenbart ebenfalls ein Triangulationsverfahren, mit welchem die Außenkontur von Brillengläsern erfasst werden kann. Neben dem Triangulationssensor wird hierbei ein Achsensystem verwendet, welches für einen Höhen- und Abstandsausgleich verwendet wird. Dieser Ausgleich wird vorgenommen, um einen spiegelnden Einfall eines Laserstrahls auf den optischen Sensor zu vermeiden, bei welchem der einfallende Laserstrahl und die optische Achse des Abbildungssystems jeweils den gleichen Winkel zum Lot auf die zu vermessende Kontur aufweisen.

FR 2 713 758 A1 offenbart eine Vorrichtung zum automatischen Ermitteln der Form und/oder des Profils einer Innenkontur einer Öffnung einer Brillenfassung, umfassend eine optische Einrichtung zum Erfassen des Bildes von charakteristischen Punkten der Innenkontur, eine Analyseeinheit zur Bestimmung der räumlichen Koordinaten der charakteristischen Punkte, und eine Berechnungseinheit zum Rekonstruieren der Form und/oder des Profils der Kontur der Brillenfassung aus den räumlichen Koordinaten, wobei die optische Einrichtung eine Lichtquelle umfasst, die einen kohärenten Lichtstrahl erzeugt, die punktförmig die Innenkontur der Brillenfassung beaufschlagt, und wobei die Analyse- und Berechnungseinheit das Profil mittels optischer Triangulation rekonstruieren.

DE 100 49 382 A1 offenbart eine optoelektronische Messanordnung zur Vermessung der Geometrie von Linsenrädern, bestehend aus einer Beleuchtungseinheit und einer Beobachtungseinheit, die unter einem Triangulationswinkel und unter Einhaltung der Scheimpflug-Bedingung zur Beleuchtungsanordnung angeordnet ist. Zur Messung wird die Linse um eine Drehachse relativ gegen die Messanordnung gedreht, und die Beleuchtungseinheit ist zu einem Lichtband aufgeweitet, das einen Lichtschnitt in etwa senkrecht zur Drehebene der Linse bildet.

DE 197 25 159 C1 offenbart eine Messanordnung zum Erfassen und Vermessen von Brillenbauteilen, wobei mit einer berührungslos arbeitenden optoelektronischen Abtasteinrichtung mit Matrixkamera die Kontur der Brillenfassung in der xy-Ebene erfasst wird. Es ist eine zweite Abtasteinrichtung der ersten Abtasteinrichtung zugeordnet, wobei die zweite Abtasteinrichtung aus einem eindimensionalen Triangulationsmesssensor und einer ihr zugeordneten Spiegelanordnung besteht.

DE 197 21 688 A1 offenbart eine Oberflächenerfassungseinrichtung nach dem Triangulationsprinzip zur 3-D-Datengewinnung, mit Bestrahlungseinrichtungen zum Bestrahlen zumindest eines Teils der zu erfassenden Objektoberfläche und Beobachtungseinrichtungen zum Abbilden wenigstens eines Ausschnittes des bestrahlten Teils der zu erfassenden Objektoberfläche auf Sensoreinrichtungen zum Detektieren. Weiterhin wird ein Verfahren zur Oberflächenerfassung nach dem Triangulationsprinzip zur 3-D-Datengewinnung offenbart, wobei mit Bestrahlungseinrichtungen zumindest ein Teil der zu erfassenden Objektoberfläche bestrahlt und wenigstens ein Ausschnitt des bestrahlten Teils der zu erfassenden Objektoberfläche mittels Beobachtungseinrichtungen zum Detektieren auf Sensoreinrichtungen abgebildet wird. Zur Verbesserung der erzielbaren Messergebnisse wird hierbei die die Bildebene der Beobachtungseinrichtungen bildende strahlungssensitive Oberfläche 12 der Sensoreinrichtungen gemäß der Scheimpflug-Bedingung eingestellt.

Ungeachtet der aufgeführten Vorrichtungen und Verfahren zur Vermessung einer Innenkontur einer Brillenfassung stellt das Zentrieren von einzeln gefertigten Brillengläsern in eine ideale Sehachse eine beträchtliche Aufgabe dar. Obwohl die Brillengläser in der Regel zwar mit dauerhaften, meistens lasersignierten Referenzmarkierungen versehen werden, ist ein idealer Durchblickpunkt für einen Brillenträger in räumlicher Anordnung jedoch nicht ersichtlich ist, so dass selbst bei erfahrenen Augenoptiker eine Zentriertoleranz im Bereich von etwa $\pm$ 5 mm liegt. In Folge dieser Zentriertoleranz kann das Brillenglas soweit von seiner idealen Position entfernt sein, dass der Brillenträger nicht die erwartete und technisch mögliche Korrektur erfährt, sondern eine Unzufriedenheit mit der Zentrierung äußert oder eine Reklamation der Brille wegen Unverträglichkeit vornimmt. In diesem Zusammenhang wird darauf hingewiesen, dass Unverträglichkeit der Brille für den Brillenträger den mit Abstand häufigsten Reklamationsgrund darstellt.

WO 2019/026416 A1, die einen nachveröffentlichten Stand der Technik gemäß Art. 54(3) EPÜ darstellt, offenbart eine Vorrichtung zur optischen Vermessung einer Innenkontur einer Brillenfassung, wobei die Vorrichtung eine optische Einheit umfasst, welche zur Erfassung eines von einem beleuchteten Abschnitt der Innenkontur der Brillenfassung reflektierten Lichts eingerichtet ist, wobei die optische Einheit in die Innenkontur der Brillenfassung einführbar ist und bei bestimmungsgemäßer Einführung in die Innenkontur der Brillenfassung gegenüber der Brillenfassung drehbar gelagert ist, wobei die optische Einheit zumindest eine Lichtquelle, ein Objektiv und mindestens einen optischen Sensor aufweist, wobei die Lichtquelle zur Erzeugung eines Lichtschnittes eingerichtet ist, wobei zumindest ein Abschnitt der Innenkontur mittels des Lichtschnittes beleuchtbar ist, wobei das Objektiv zur Abbildung des beleuchteten Abschnitts der Innenkontur auf den optischen Sensor eingerichtet ist, und wobei der optische Sensor zur Erfassung des von dem beleuchteten Abschnitt der Innenkontur reflektierten Lichts eingerichtet ist, wobei die Lichtquelle, der beleuchtbare Abschnitt der Innenkontur, das Objektiv und der optische Sensor derart zueinander angeordnet sind, dass der von dem Lichtschnitt beleuchtbare Abschnitt der Innenkontur in eine objektseitige Schärfeebene legbar ist und dass der optische Sensor in einer bildseitigen Schärfeebene anordenbar ist, wobei sich die objektseitige Schärfeebene, eine Objektivebene und die bildseitige Schärfeebene in einer gemeinsamen Geraden schneiden.

Aufgabe der Erfindung

Insbesondere vor dem Hintergrund der WO 2019/026416 A1 besteht die Aufgabe der vorliegenden Erfindung darin, eine Vorrichtung und ein Verfahren zur optischen Vermessung einer Innenkontur einer Brillenfassung, ein System zur optischen Vermessung einer Brille und ein Verfahren zur Herstellung einer Brille bereitzustellen, welche die aufgeführten Nachteile und Einschränkungen des Standes der Technik zumindest teilweise überwinden.

Insbesondere sollen die Vorrichtung und das Verfahren eine optische Vermessung einer Innenkontur eines Brillenfassungsrahmens, beispielsweise einer in einer Öffnung eines Brillengestells umlaufenden Nut, aber auch einer Außenkontur der Brillenfassung, eines Brillenglases und/oder einer Stützscheibe mit hoher Auflösung innerhalb einer möglichst geringen Aufnahmedauer ermöglichen.

Weiterhin sollen das System zur optischen Vermessung einer Brille und das Verfahren zur Herstellung einer Brille eine optische Vermessung der Innenkonturen von zwei Brillenfassungsrahmen eines Brillengestells sowie des zugehörigen Abstands der beiden Brillenfassungsrahmen des Brillengestells ermöglichen.

Offenbarung der Erfindung

Diese Aufgabe wird gelöst durch eine Vorrichtung und ein Verfahren zur optischen Vermessung einer Innenkontur einer Brillenfassung, ein System zur optischen Vermessung einer Brille und ein Verfahren zur Herstellung einer Brille mit den Merkmalen der unabhängigen Patentansprüche. Bevorzugte Ausgestaltungen, welche einzeln oder in Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben dem durch diese Begriffe eingeführten Merkmal, keine weiteren Merkmale vorhanden sind oder auf Situationen, in welchen ein oder mehrere weitere Merkmale vorhanden sind. Beispielsweise kann sich der Ausdruck "A hat B", "A weist B auf, "A umfasst B" oder "A schließt B ein" sowohl auf die Situation beziehen, in welcher, abgesehen von B, kein weiteres Element in A vorhanden ist, d.h. auf eine Situation, in welcher A ausschließlich aus B besteht, als auch auf die Situation, in welcher, zusätzlich zu B, ein oder mehrere weitere Elemente in A vorhanden sind, beispielsweise Element C, Elemente C und D oder sogar weitere Elemente.

In einem ersten Aspekt betrifft die vorliegende Erfindung eine Vorrichtung zur optischen Vermessung einer Innenkontur einer Brillenfassung. Unter dem Begriff der "Brille" wird im Rahmen der vorliegenden Erfindung ein beliebiges Element verstanden, welches zumindest zwei Komponenten aufweist, wobei eine erste Komponente mindestens ein Brillenglas, vorzugsweise zwei Brillengläser, umfasst und die mindestens eine weitere Komponente, die auch als "Brillengestell" bezeichnet werden kann, über eine Halterung für das mindestens eine Brillenglas, bevorzugt für die beiden Brillengläser, vorzugsweise in Form einer Brillenfassung oder einer Halteeinrichtung für ein Brillenglas, verfügt. Hierbei können "Vollrandbrillen", welche einen die beiden Brillengläser jeweils umschließenden Brillenfassungsrahmen aufweisen, von "Halbrandbrillen", in denen die beiden Brillengläser nur teilweise von einer Halterung umschlossen werden, und von "rahmenlosen Brillen", in welchen die Brillengläser jeweils über eine Bohrung zur Aufnahme einer Halteeinrichtung verfügen, unterschieden werden. Alternativ kann eine Stützscheibe in den Brillenfassungsrahmen eingebracht werden. Darüber hinaus können weitere Komponenten vorgesehen sein, insbesondere mindestens ein Brillenbügel zum Tragen der Brille an einem Ohr und/oder mindestens ein Pad zur Auflage an einer Nase eines Benutzers der Brille.

Unter einem "Brillenglas" wird im Rahmen der vorliegenden Erfindung ein beliebiges Element verstanden, welches zu einer Beeinflussung von elektromagnetischen Wellen im Bereich des sichtbaren Spektralbereichs eingerichtet ist, um ein Sehen eines menschlichen oder tierischen Auges zu verändern, vorzugsweise zu verbessern. Hierzu kann das Brillenglas vorzugsweise als brechende optische Linse oder als Linsensystem, umfassend eine Mehrzahl an brechenden optischen Linsen, ausgestaltet sein. Vorzugsweise kann das Brillenglas ein optisch transparentes Material, insbesondere ausgewählt aus Glas, Quarz oder einem transparenten organischen Kunststoff, aufweisen. Insbesondere kann das Brillenglas zumindest teilweise an einem Rand eine Verjüngung zur Einbringung des Brillenglases in eine dafür vorgesehene Nut und/oder in der Nähe des Randes des Brillenglases Bohrungen zur Anbringung einer Halteeinrichtung aufweisen. Das Brillenglas, welches allgemein als gekrümmte Scheibe vorliegt, verfügt somit über eine "Außenkontur", womit das Profil der an der Seite der Scheibe umlaufenden Form des Brillenglases bezeichnet wird.

Der Begriff der "Stützscheibe" betrifft dagegen ein beliebiges Element aus einem planaren, optisch transparenten Material, insbesondere ausgewählt aus Glas, Quarz oder einem transparenten organischen Kunststoff, welches dazu vorgesehen sein kann, um hieraus ein Brillenglas herzustellen oder um als Vorlage für ein Brillenglas zu dienen, wobei räumliche Abmessungen der Stützscheibe denen des Brillenglases angenähert sein können. Gemäß ISO 8624:2011, Definition A.12 ist eine Stützscheibe oder eine Demoscheibe ein zu Demonstrationszwecken in die Brillenfassung eingesetztes Brillenglas ohne dioptrische Wirkung ist. Die Stützscheibe, welche im Allgemeinen in Form einer planaren Scheibe vorliegt, verfügt somit über eine "Außenkontur", womit das Profil der an der Seite der Scheibe umlaufenden Form der Stützscheibe bezeichnet wird.

Der Begriff der "Brillenfassung" betrifft im Rahmen der vorliegenden Erfindung ein beliebiges Element, welches dazu eingerichtet ist, um mindestens ein Brillenglas, vorzugsweise zwei Brillengläser, aufzunehmen. Hierzu kann die Brillenfassung über einen, auch als "Brillenfassungsrahmen" bezeichneten Rahmen verfügen, welcher rechts- und linksseitig jeweils eine als "Aufnahme" bezeichnete Öffnung für je ein Brillenglas aufweisen kann. Der Brillenfassungsrahmen kann hierbei mit einer Aufnahme, bevorzugt mit zwei Aufnahmen, versehen sein, wobei jede Aufnahme geschlossen sein und eine im Inneren des Rahmens umlaufende Nut aufweisen kann, die zur Aufnahme des Brillenglases eingerichtet sein kann. Die Brillenfassung verfügt somit über eine "Innenkontur", womit das Profil der im Inneren des Brillenfassungsrahmens umlaufenden Form bezeichnet wird. Bevorzugt kann der Brillenfassungsrahmen ein nicht-transparentes Material, insbesondere ein festes, jedoch flexibles und leichtes Material aufweisen. An der Brillenfassung, insbesondere an dem Brillenfassungsrahmen, können, darüber hinaus weitere Komponenten, angebracht sein, insbesondere mindestens ein Brillenbügel zum Tragen der Brille an einem Ohr und/oder mindestens ein Pad zur Auflage an einer Nase eines Benutzers der Brille, deren optische Vermessung im Rahmen der vorliegenden Erfindung jedoch nicht vorgesehen ist.

Unter dem Begriff der "optischen Vermessung" der Innenkontur wird im Rahmen der vorliegenden Erfindung ein beliebiges Vorgehen verstanden, welches dazu eingerichtet ist, um eine Form zumindest eines Teils der Innenkontur, bevorzugt der gesamten Innenkontur, auf optischem Wege zu erfassen. Damit schließt die vorliegende Erfindung einerseits Verfahren zur Vermessung der Innenkontur aus, bei welcher ein Berühren der Innenkontur mit einer Messeinrichtung, zum Beispiel einem Taststift erfolgt, und andererseits Verfahren, in welchen das Vermessen der Innenkontur zwar berührungslos, aber nicht mit einem optischen Verfahren, beispielsweise durch Beaufschlagung mittels Ultraschall, erfolgt.

Die Erfassung der Form zumindest eines Teils der Innenkontur auf optischem Wege erfolgt hierbei durch Beaufschlagen eines Abschnitts einer Oberfläche der Innenkontur mit Licht, wobei die Oberfläche der Innenkontur ein Teil des Lichtes reflektiert und mittels eines Objektivs auf mindestens einem optischen Sensor abgebildet wird, wobei der mindestens eine optische Sensor insbesondere dazu eingerichtet ist, um mindestens eine Eigenschaft des reflektierten Lichts nachzuweisen. Der Begriff des "Lichts" bezeichnet hierbei elektromagnetische Wellen im Bereich des sichtbaren Spektralbereichs oder angrenzender Spektralbereiche, insbesondere im Bereich des Infrarots, vorzugsweise des nahen Infrarots. Die Vermessung stellt im allgemeinen Messwerte in Form mindestens einer elektrischen Größe, zum Beispiel einer elektrischen Spannung oder eines elektrischen Stroms, bereit, aus denen sich mittels eines Algorithmus die Form der Oberfläche der Innenkontur als dreidimensionale Messdaten ermitteln lassen, welche vorzugsweise in Form von kartesischen Koordinaten x, $y$ und z oder, alternativ, als Zylinderkoordinaten r, $\varphi$ und $h$ oder als Polarkoor-dinaten $\varphi$, $\theta$ und r bereitgestellt werden. Andere Arten von Messwerten sind jedoch möglich. Auf diese Weise können von einem Sensor erfasste Messdaten in Koordinaten umgerechnet werden.

Die vorgeschlagene Vorrichtung zur optischen Vermessung einer Innenkontur einer Brillenfassung umfasst eine optische Einheit, welche zur Erfassung eines von einem beleuchteten Abschnitt der Innenkontur der Brillenfassung reflektierten Lichts eingerichtet ist. Der Begriff der "optischen Einheit" betrifft im Rahmen der vorliegenden Erfindung ein beliebiges Element, welches dazu eingerichtet ist, um einerseits Licht zu erzeugen und um andererseits Licht nachzuweisen. In einer besonders bevorzugten Ausgestaltung umfasst die optische Einheit zumindest eine Lichtquelle, ein Objektiv und mindestens einen optischen Sensor. In dieser Ausgestaltung übernimmt hierbei die Lichtquelle die Erzeugung des Lichts, während das Objektiv und der optische Sensor zur Erfassung des Lichts eingerichtet sind. Hierbei können die Lichtquelle, das Objektiv und der optische Sensor besonders bevorzugt fest zueinander angeordnet sein.

Die Lichtquelle ist hierbei zur Erzeugung eines Lichts in Form eines schmalen, linienförmigen Bereichs, der auch als "Lichtschnitt" oder "Lichtlinie" bezeichnet werden kann, eingerichtet. Als die Lichtquelle kann sich vorzugsweise ein Laser eignen; andere Arten von Lichtquellen, etwa Leuchtdioden, sind jedoch ebenfalls möglich. Eine Laserlichtquelle eignet sich daher insbesondere zur Bereitstellung eines Lichtschnitts, da sie dazu ausgestattet ist, einen Laserlichtstrahl, welche einen geringen Öffnungswinkel aufweist, oder, etwa durch eine schnelle veränderliche Verkippung des Laserlichtstrahls entlang einer Linie, eine Lichtlinie, welche daher ebenfalls über den geringen Öffnungswinkel verfügt, zu erzeugen.

Die vorgeschlagene Vorrichtung ist nun derart ausgestattet, dass zumindest ein Abschnitt der Innenkontur, vorzugsweise genau ein Abschnitt der Innenkontur innerhalb eines Zeitintervalls, durch den von der Lichtquelle, insbesondere der Laserlichtquelle, bereitgestellte Lichtschnitt beleuchtbar ist. Hierzu verfügt die optische Einheit weiterhin über mindestens ein optisches Umlenkelement, welches dazu eingerichtet ist, um eine Richtung des Lichtstrahls in einer vorgebbaren Weise zu verändern. Das optische Umlenkelement kann hierbei die Richtung des Lichtstrahls um einen Winkel größer als 0° bis kleiner als 180° ändern, bevorzugt um 60° bis 120°, insbesondere um 75° bis 105°, beispielsweise um 90°. Als optisches Umlenkelement können vorzugsweise Spiegel, Prismen, Strahlteiler oder optische Gitter eingesetzt werden. Andere Arten von optischen Umlenkelementen, welche insbesondere eine Mehrzahl an reflektierenden optischen Elementen aufweisen können, sind jedoch ebenfalls möglich.

Der Abschnitt der Innenkontur, welcher von dem Lichtschnitt beaufschlagt wird, kann hierbei einen festgelegten Teil der Brillenfassung umfassen. Der Begriff des "Abschnitts" bezeichnet hierbei einen Bereich der Innenkontur, welcher geringer ist als die gesamte Oberfläche der Innenkontur. Insbesondere kann der Abschnitt der Innenkontur einen festgelegten Winkelbereich, bevorzugt von 0,25° bis 10°, besonders bevorzugt von 0,5° bis 2,5°, insbesondere von 1,0° bis 2°, der Innenkontur der Brillenfassung aufweisen. Besonders vorteilhaft kann der Winkelbereich so gewählt werden, dass er eine ausreichende Auflösung der optischen Erfassung der Innenkontur innerhalb eines geringen Zeitintervalls ermöglicht. Andere Arten von Abschnitten oder Werten für den Winkelbereich sind jedoch möglich.

Auf diese Weise kann das Objektiv ein einzelnes Bild des beleuchteten Abschnitts der Innenkontur auf der Sensorfläche des optischen Sensors erzeugen. Um jedoch weitere Teile der Form der Brillenfassung, insbesondere die gesamte Außenkontur der Brillenfassung, optisch vermessen zu können, ist optische Einheit erfindungsgemäß in die Innenkontur der Brillenfassung einführbar und bei bestimmungsgemäßer Einführung in die Innenkontur der Brillenfassung gegenüber der Brillenfassung drehbar gelagert. Der Begriff "einführbar" bezeichnet hierbei, dass die optische Einheit, welche, wie oben beschrieben, zumindest eine Lichtquelle, ein Objektiv und mindestens einen optischen Sensor umfasst, derart bewegbar ist, dass sie eine gedachte Ebene welche aus mindestens drei Punkten auf der Innenkontur der Brillenfassung erstellbar ist, zumindest während der optischen Vermessung der Innenkontur der Brillenfassung zumindest berühren, vorzugsweise jedoch schneiden kann, während hierbei die Brillenfassung vorzugsweise feststehend gelagert ist. Der Begriff "bestimmungsgemäß" bezeichnet hierbei die Einführung der optischen Einheit in die Innenkontur der Brillenfassung zum Zweck der optischen Vermessung der Innenkontur der Brillenfassung.

Weiterhin beschreibt der Begriff "gegenüber der Brillenfassung drehbar gelagert", dass einerseits die optische Einheit gegenüber der Brillenfassung derart anordenbar ist, dass mindestens zwei gesonderte Abschnitte der Innenkontur der Brillenfassung, vorzugsweise die gesamte Innenkontur, mittels des Lichtschnittes beleuchtbar sind und dass der optische Sensor zur Aufnahme eines Bildes des jeweils beleuchteten Abschnitts eingerichtet ist, indem die optische Einheit drehbar ist. Hierzu kann die Vorrichtung über eine Dreheinrichtung verfügen, welche zu einer Drehung der gesamten optischen Einheit eingerichtet ist. Die optische Einheit, welche durch die Dreheinrichtung drehbar ist, und die Brillenfassung können hierbei vorzugsweise derart zueinander angeordnet sein, dass bereits durch eine Drehung die gesamte Innenkontur von dem Lichtschnitt überfahren werden kann; eine weitere Veränderung der optischen Einheit oder der Brillenkontur während der optischen Vermessung kann entfallen. Auf diese Weise kann die optische Einheit jeweils in vorgebbaren Schritten, insbesondere um einen vorgebbaren Winkelbereich, bevorzugt von 0,25° bis 10°, besonders bevorzugt von 0,5° bis 2,5°, insbesondere von 1,0° bis 2°, gedreht werden. Damit kann der optische Sensor zur Aufnahme jeweils eines Bildes von 30 bis 1500, bevorzugt von 36 bis 1440, mehr bevorzugt von 144 bis 720, insbesondere von 180 bis 360, jeweils beleuchteten Abschnitten der Innenkontur eingerichtet sein.

Vor allem zur Bestimmung eines Wertes für den Winkel kann die die optische Einheit weiterhin eine für diesen Zweck eingerichtete Einrichtung aufweisen. In einer besonderen Ausgestaltung kann die Einrichtung zur Bestimmung eines Wertes eine Einrichtung zur Erzeugung eines Index umfassen, wobei ein damit erzeugte Index in Bezug zu dem zu bestimmenden Winkel steht. Andere Arten der Bestimmung eines Wertes für den Winkel sind jedoch möglich.

Damit unterscheidet sich die vorliegende Vorrichtung zur optischen Vermessung der Innenkontur von Brillenfassungen von der Vorrichtung aus EP 0 974 038 B1, welche eine Drehung der Brillenfassung erfordert. Da erfindungsgemäß die Drehung der Brillenfassung selbst unterbleibt, ist es folglich nicht länger erforderlich, die Brille von ihrer linken Seite auf ihre rechte Seite umzuspannen werden, wodurch, wie unten näher beschrieben, auch Information über den Augenabstand erfassbar ist.

Die zu vermessende Brillenfassung kann durch eine Halteeinrichtung aufgenommen sein, wobei die Halteeinrichtung vorzugsweise an die Form der Brillenfassung angepasst sein kann. Die Halteeinrichtung kann hierbei zusätzlich zu der vorgeschlagenen Vorrichtung bereitgestellt werden. Die Halteeinrichtung kann insbesondere fest in Bezug auf die optische Einheit ausgestaltet sein. Bevorzugt kann die zu vermessende Brillenfassung an der sie aufnehmenden Halteeinrichtung lösbar befestigbar sein, vorzugsweise durch eine mechanische Einrastung, eine magnetische Befestigung oder eine lösbare Verklebung. Andere Arten der Befestigung sind jedoch möglich.

In Folge dieser Beleuchtung durch den Lichtschnitt reflektiert der betreffende Abschnitt der Innenkontur der Brillenfassung einen Teil des ihn beaufschlagenden Laserlichts. Für den Fall, dass die Brillenfassung, welche von dem Lichtschnitt beaufschlagt wird, ganz oder teilweise transparent ist, können Streuzentren in der Brillenfassung bereitgestellt werden, insbesondere durch vorzugsweise vorübergehendes Aufbringen einer Beschichtung auf die Brillenfassung, bevorzugt mittels einer Emulsion und/oder durch Mikropartikel. Durch die Reflektion an der Oberfläche der Innenkontur der Brillenfassung oder der hierauf aufgebrachten Beschichtung kann ein Teil des Laserlichts, beispielsweise durch Totalreflektion, zurückgeworfen werden und gelangt so durch das Objektiv in den optischen Sensor, welche derart positionierbar sind, dass der reflektierte Teil des Laserlichts den optischen Sensor beaufschlagt. Für die vorliegende Vermessung der Innenkontur genügt es, wenn nur ein geringer Anteils des Lichts, etwa nur 0,1 % bis 10 % des von der Lichtquelle emittierten Lichts, von dem mindestens einen optischen Sensor erfasst werden können. Eine Reflektion eines Anteils des Lichts von 10 % oder höher kann jedoch vorteilhaft für ein höheres Signal-zu-Rausch-Verhältnis sein.

Derjenige Teil der optischen Einheit, welcher zur Erfassung des von dem beleuchteten Abschnitt der Innenkontur reflektierten Lichts eingerichtet ist, umfasst hierbei wenigstens einen optischen Sensor. Der Begriff des "optischen Sensors" bezeichnet hierbei eine beliebige optische Detektoreinheit, welche, abhängig von einer Beaufschlagung einer optischen empfindlichen Sensorfläche des optischen Sensors mit Licht, als Messwert eine elektrische Größe, zum Beispiel eine elektrische Spannung oder einen elektrischen Strom, erzeugen kann, welche als Eingangsgröße zur weiteren Verarbeitung in einem oder mehreren Algorithmen dienen kann. In einer besonders bevorzugten Ausgestaltung können die erfassten Messdaten auf einer Erfassung des von dem beleuchteten Abschnitt der Innenkontur der Brillenfassung reflektierten Lichts beruhen und somit insbesondere mit dem von dem optischen Sensor erfassten Anteil an dem reflektierten Licht in Beziehung stehen. Wie oben bereits erwähnt, kann sich auf diese Weise die Form der Oberfläche der Innenkontur als dreidimensionale Messdaten ermitteln lassen. Andere Arten der Bereitstellung der Messwerte sind jedoch grundsätzlich möglich. Der optische Sensor kann vorzugsweise in Form einer Sensormatrix, umfassen eine Mehrzahl an einzeln auslesbaren Sensorpixeln, bereitgestellt werden. In einer besonders bevorzugten Ausgestaltung kann der optische Sensor einen Durchmesser von 5 mm bis 25 mm, insbesondere von 10 mm bis 20 mm, aufweisen. Als optischer Sensor kann sich bevorzugt eine CCD-Sensormatrix eignen. Andere Arten von optischen Sensoren sind jedoch möglich.

Derjenige Teil der optischen Einheit, welcher zur Erfassung des von dem beleuchteten Abschnitt der Innenkontur reflektierten Lichts eingerichtet ist, umfasst zusätzlich zu dem mindestens einen optischen Sensor ein Objektiv. Der Begriff des "Objektivs" oder der "optischen Abbildungseinheit" betrifft grundsätzlich mindestens ein sammelndes optisches Element, welches dazu eingerichtet ist, um ein reelles optisches Bild eines Gegenstands, vorzugsweise in einer möglichst hohen Schärfe auf der Sensorfläche des optischen Sensors, zu erzeugen. Somit kann das Objektiv insbesondere mindestens ein sammelndes optisches Element, beispielsweise eine einzige Sammellinse, vorzugsweise jedoch eine Mehrzahl an aufeinander abgestimmten optischen Linsen, aufweisen. Eine bevorzugte Ausführung des Objekts für die vorgeschlagene Vorrichtung findet sich in den Ausführungsbeispielen.

Wie in EP 0 974 038 B1 erläutert, kann die Laserlichtquelle eine Lichtlinie auf den zu vermessenden Abschnitt der Innenkontur der Brillenfassung projizieren, wobei die Reflexion der Lichtlinie von einem optischen Sensor nachgewiesen werden kann, welche in einem Triangulationswinkel $\gamma$ relativ zu der Laserlichtquelle angebracht ist. Somit kann aufgrund einer der Triangulation zugrundeliegenden Gleichung (1), welche besagt, dass

$$\Delta x = \beta \cdot sin\, \gamma \cdot \Delta z, \qquad\qquad (1)$$

wobei $\Delta x$ einen Abstand zweier Messpunkte auf Bild der Innenkontur auf dem optischen Sensor, $\Delta z$ einen Abstand zweier Messpunkte auf der Oberfläche der Innenkontur und $\beta$ einen Abbildungsmaßstab des Objektivs bezeichnen, der Abstand $\Delta z$ zweier Messpunkte auf der Oberfläche der Innenkontur ermittelt werden. Der Begriff der "Triangulation" bezeichnet hierbei ein geometrisches Verfahren, welches eine optische Abstandsmessung durch eine messtechnische Erfassung von Winkeln innerhalb eines Dreiecks ermöglicht. In einer besonders bevorzugten Ausgestaltung kann hierbei, ausgehend von zwei Punkten, deren gegenseitiger Abstand bekannt ist, durch die messtechnische Erfassung von zwei Winkeln grundsätzlich jeder weitere Punkt im Raum ermittelt werden. Allerdings gibt EP 0 974 038 B1 keinen möglichen Wert für den Triangulationswinkel $\gamma$ an.

Die allgemeine Linsengleichung:

$$1/a + 1/b = 1/f, \qquad\qquad (2)$$

wobei $a$ die Objektweite, $b$ die Bildweite und $f$ die Brennweite des Objektivs bezeichnen, zeigt die Voraussetzung, unter der jedem Punkt eines Objekts ein scharf abgebildeter Bildpunkt auf einer bildseitigen Schärfeebene zugeordnet werden kann. In einer üblichen Kamera sind objektseitige Schärfeebene, Objektivebene und bildseitige Schärfeebene parallel zueinander angeordnet, wobei die Objektweite $a$ einen Abstand zwischen der objektseitigen Schärfeebene und der Objektivebene und die Bildweite $b$ einen Abstand zwischen der Objektivebene und der bildseitigen Schärfeebene angeben. Hierbei bezeichnen die Begriffe "bildseitige Schärfeebene" oder "Bildebene" einen planaren Bereich im Bildraum des optischen Sensors, insbesondere auf der optisch empfindlichen Sensorfläche des optischen Sensors, in welchem ein scharf abgebildeter Bildpunkt von Punkten des Objekts erzeugt werden kann, sofern sich das Objekt in der objektseitigen Schärfeebene befindet. Die Begriffe "objektseitige Schärfeebene" oder "Objektebene" bezeichnen einen planaren Bereich des Objekts, in welchem jedem einzelnen Punkt des Objekts ein scharf abgebildeter Bildpunkt zugeordnet werden kann, während dien Begriffe "Objektivebene" oder "objektivseitige Hauptebene" eine rechtwinklig zur optischen Achse des Objektivs ausgebildete Ebene bezeichnen.

Im Gegensatz zu der parallelen Anordnung der objektseitigen Schärfeebene, der Objektivebene und der bildseitigen Schärfeebene in einer üblichen Kamera werden hier jedoch die so genannte "Scheimpflugsche Regel" beachtet und daher die Lichtquelle, der beleuchtbare Abschnitt der Innenkontur, das Objektiv und der mindestens einen optische Sensor derart zueinander angeordnet, dass der von dem Lichtschnitt beleuchtbare Abschnitt der Innenkontur in die objektseitige Schärfeebene der Innenkontur legbar ist und dass der mindestens eine optische Sensor in der bildseitigen Schärfeebene anordenbar ist, wobei sich die objektseitige Schärfeebene, die Objektivebene und die bildseitige Schärfeebene in einer gemeinsamen Geraden schneiden, wobei ein theoretisch denkbarer Grenzfall, dass sich diese drei genannten Ebenen im Unendlichen schneiden, hiervon ausdrücklich ausgenommen ist. Durch hier die vorgeschlagene Anordnung der Lichtquelle, des jeweils beleuchteten Abschnitts der Innenkontur, des Objektivs und des optischen Sensors kann in vorteilhafter Weise erreicht werden, dass der jeweils beleuchtete Abschnitt der Innenkontur stets scharf auf der bildseitigen Schärfeebene in dem optischen Sensor, insbesondere auf der optisch empfindlichen Sensorfläche des optischen Sensors, abgebildet werden kann. Auf diese Weise kann beispielsweise mittels eines optischen Verfahrens zur Bestimmung eines Abstands, vorzugsweise mittels Triangulation, ein Abstand zwischen dem optischen Sensor und dem beleuchteten Abschnitt der Innenkontur bestimmt werden, woraus sich insbesondere die geometrische Form der Innenkontur ermitteln lässt. Auch in dieser Ausgestaltung kann die Vorrichtung eine vorbestimmte räumliche Anordnung in Bezug auf die Brillenfassung einnehmen, obwohl die Brillenfassung selbst nicht Gegenstand der Vorrichtung ist. Hierbei kann für die Brillenfassung ein vorbestimmter Raum vorgesehen sein, in dem die Brillenfassung in Bezug auf die Vorrichtung anordenbar ist, vorzugsweise unter Beachtung der Scheimpflugschen Regel, gemäß welcher sich die Lichtquelle, der beleuchtbare Abschnitt der Brillenfassung, das Objektiv und der mindestens eine optische Sensor wie beschrieben zueinander anordnen lassen.

In dieser Anordnung lässt sich die allgemeine Linsengleichung (2) wie folgt fassen:

$$tan\ \varphi = \beta \cdot tan\ \theta, \hspace{3cm} (3)$$

wobei $\theta$ einen Winkel zwischen der objektseitigen Schärfeebene und der Objektivebene, $\varphi$ einen Winkel zwischen der Objektivebene und der bildseitigen Schärfeebene sowie $\beta$ wiederum den Abbildungsmaßstab des Objektivs bezeichnen. In einer besonders bevorzugten Ausgestaltung kann der Winkel $\theta$ zwischen der objektseitigen Schärfeebene und der Objektivebene einen Wert von 60° bis 85°, bevorzugt von 65° bis 80°, insbesondere von 70° bis 75°, annehmen, während der Winkel $\varphi$ zwischen der Objektivebene und der bildseitigen Schärfeebene einen Wert 15° bis 75°, vorzugsweise von 30° bis 60°, insbesondere von 40° bis 50°, einnehmen kann. Hieraus ergibt sich insbesondere, dass die objektseitige Schärfeebene und die bildseitige Schärfeebene unter einem Neigungswinkel zueinander angeordnet sind, wobei ein Neigungswinkel von 75° bis 160°, vorzugsweise von 95° bis 140°, insbesondere von 100° bis 125°, bevorzugt ist. In einer besonders bevorzugten Ausgestaltung kann dieser Neigungswinkel bei einer Bewegung der optischen Einheit in Bezug auf die zu vermessende Innenkontur, bevorzugt mittels der Dreheinrichtung für die optische Einheit, insbesondere um die gesamte Form der Innenkontur zu vermessen, beibehalten.

In einer weiteren Ausgestaltung kann die optische Einheit über einer zweite Dreheinrichtung verfügen, welche dazu einsetzbar ist, um die optische Einrichtung auszurichten und zu arretieren. Zur Arretierung kann beispielsweise eine Kombination aus Gewindestift und einer Kunststoffkugel eingesetzt werden. Die zweite Dreheinrichtung kann insbesondere mittels eines Vakuums ein Brillenglas ansaugen und vor dem Objektiv drehen, wobei die Drehung vorzugsweise mit einer Bildaufnahmefrequenz synchronisiert werden kann. In dieser Ausgestaltung kann zusätzlich die Außenkontur des Brillenglases, einer Stützscheibe oder der Brillenfassung ermittelt werden.

In einer besonders bevorzugten Ausgestaltung kann die optische Einheit weiterhin eine Einrichtung zur Datenreduktion aufweisen. Der Begriff der "Datenreduktion" bezeichnet hierbei eine Verringerung eines Umfangs an Messdaten in Bezug auf Rohdaten, welche insbesondere von dem mindestens einen optischen Sensor erfasst werden. Die Einrichtung zur Datenreduktion kann vorzugsweise über einen Computer, einen Mikrocomputer oder einen programmierbaren Chip, z.B. eine anwendungsspezifische integrierte Schaltung (engl. *application-specific integrated circuit;* ASIC) oder besonders bevorzugt über ein FPGA (engl. *field-programmable gate Array),* verfügen. Die von dem optischen Sensor gelieferten Rohdaten können hierbei um einen Faktor von mindestens 50, vorzugsweise von mindestens 100, besonders bevorzugt von mindestens 250 verringert werden, bevor sie als reduzierte Messdaten einer unten näher beschriebenen Auswerteeinheit bereitgestellt werden. Dabei können insbesondere Filter angewendet werden. Wird der Lichtschnitt beispielsweise von rechts nach links über die Innenkontur der Brillenfassung geführt, so kann vorzugsweis eine Kantenantastung gewählt werden, welche einen Schwellwert aus dieser Richtung festlegen kann. Darüber hinaus können insbesondere etwaig auftretende Spiegelungen und/oder Spitzlichter aus den Rohdaten herausgefiltert werden.

In einer besonderen Ausgestaltung, in welcher der Winkel zwischen dem Lot auf die Normale des zu beobachtenden Abschnitts und dem Laserlicht sowie der optischen Achse des Objektivs gleich ist, kann in nachteiliger Weise ein großer Teil des Laserlichts direkt in das Objektiv gespiegelt werden, was zu einer starken Überstrahlung führen kann. Um derartige nachteilige Auswirkungen begrenzen zu können, kann die Einrichtung zur Datenreduktion weiterhin über eine Verstärkungsregelung verfügen, welche dazu eingerichtet sein kann, um Helligkeitsschwankungen des von der Innenkontur reflektierten Lichts auf dem optischen Sensor auszugleichen.

In einer weiteren bevorzugten Ausgestaltung kann die optische Einheit ferner eine Einrichtung zur optischen Datenübertragung aufweisen. Der Begriff der "Einrichtung zur Datenübertragung" betrifft hierbei eine auch als "Transceiver" bezeichnete Einrichtung, welche zur Übermittlung der Messdaten, insbesondere der Rohdaten oder, vorzugsweise, der hieraus erfassten reduzierten Messdaten, an die Auswerteeinheit ausgestattet ist. Weitere Details zur Einrichtung zur optischen Datenübertragung werden unten im Zusammenhang mit der Darstellung des Systems zur optischen Vermessung einer Brille beschrieben.

In einer weiteren bevorzugten Ausgestaltung kann ferner eine Einrichtung zur Energiezufuhr an die optische Einheit vorgesehen sein. Der Begriff der "Einrichtung zur Energiezufuhr" bezeichnet hierbei eine Einrichtung, welche eine zum Betrieb der Komponenten der optischen Einheit erforderliche Energie bereitstellt. Weitere Details zur Einrichtung zur Energiezufuhr werden hierbei ebenfalls unten im Zusammenhang mit der Darstellung des Systems zur optischen Vermessung einer Brille beschrieben. Alternativ kann die optische Einheit jedoch auch autark ausgestaltet sein und hierbei insbesondere mittels einer Energiespeichereinheit, bevorzugt einer Batterie, betrieben werden.

In einem weiteren Aspekt betrifft die vorliegende Erfindung ein Verfahren zur optischen Vermessung einer Innenkontur einer Brillenfassung. Das Verfahren umfasst die folgenden Schritte a) bis d), vorzugsweise in der angegebenen Reihenfolge, wobei jedoch eine zumindest teilweise zeitgleiche Ausführung der Verfahrensschritte, insbesondere von aufeinanderfolgenden Verfahrensschritten möglich ist. Weiterhin können einzelne, mehrere oder alle Schritte des Verfahrens wiederholt, insbesondere mehr als einmal, ausgeführt werden. Das Verfahren kann, zusätzlich zu den genannten Verfahrensschritten auch weitere Verfahrensschritte umfassen.

Die Verfahrensschritte des Verfahrens zur optischen Vermessung einer Innenkontur einer Brillenfassung umfassen:

a) Bereitstellen einer Brillenfassung und einer Vorrichtung zur optischen Vermessung einer Innenkontur der Brillenfassung, umfassend eine optische Einheit, wobei die Vorrichtung eine optische Einheit umfasst, welche zur Erfassung eines von einem beleuchteten Abschnitt der Innenkontur der Brillenfassung reflektierten Lichts eingerichtet ist;
b) Beleuchten zumindest eines Abschnitts der Innenkontur;
c) Abbilden des beleuchteten Abschnitts der Innenkontur; und
d) Erfassen eines von dem beleuchten Abschnitt der Innenkontur reflektierten Lichts,

wobei zur Durchführung der optischen Vermessung die optische Einheit in die Innenkontur der Brillenfassung eingeführt wird und gegenüber der Brillenfassung gedreht wird.

Die optische Einheit weist zumindest eine Lichtquelle, ein Objektiv und mindestens einen optischen Sensor auf, wobei die Lichtquelle zur Erzeugung eines Lichtschnittes eingerichtet ist, wobei zumindest ein Abschnitt der Innenkontur mittels des Lichtschnittes beleuchtbar ist, wobei das Objektiv zur Abbildung des beleuchteten Abschnitts der Innenkontur auf den optischen Sensor eingerichtet ist, und wobei der optische Sensor zur Erfassung des von dem beleuchteten Abschnitt der Innenkontur reflektierten Lichts eingerichtet ist. Die Lichtquelle, der beleuchtete Abschnitt der Innenkontur, das Objektiv und der optische Sensor sind derart zueinander angeordnet, dass der von dem Lichtschnitt beleuchtete Abschnitt der Innenkontur in eine objektseitige Schärfeebene gelegt wird und dass der optische Sensor in einer bildseitigen Schärfeebene angeordnet wird, wobei sich die objektseitige Schärfeebene, eine Objektivebene und die bildseitige Schärfeebene in einer gemeinsamen Geraden schneiden. Die optische Einheit weist weiterhin mindestens ein optisches Umlenkelement auf, wobei das optische Umlenkelement den von der Lichtquelle erzeugten Lichtschnitt auf den zu beleuchtenden Abschnitt der Innenkontur richtet.

Für weitere Einzelheiten in Bezug auf das vorliegende Verfahren wird auf die obige Beschreibung der Vorrichtung zur optischen Vermessung einer Innenkontur einer Brillenfassung sowie auf die Ausführungsbeispiele verwiesen.

In einem weiteren Aspekt betrifft die vorliegende Erfindung ein System zur optischen Vermessung einer Brille. Das System umfasst hierbei mindestens eine oder zwei gesonderte Vorrichtungen zur optischen Vermessung einer Innenkontur einer Brillenfassung, bevorzugt genau eine oder genau zwei Vorrichtungen zur optischen Vermessung einer Innenkontur einer Brillenfassung, welche an anderer Stelle in diesem Dokument näher beschrieben sind, sowie eine Auswerteeinheit. Darüber hinaus wird für Definitionen und optionale Ausgestaltungen des Systems auf die Beschreibung der Vorrichtung und des Verfahrens zur optischen Vermessung einer Innenkontur einer Brillenfassung verwiesen.

Der Begriff der "Auswerteeinheit" bezeichnet hierbei eine beliebige Einrichtung, welche zu einem Empfang, einer Verarbeitung und einer Ausgabe von Daten eingerichtet ist. Bei der Auswerteeinheit kann es sich vorzugsweise um eine elektronisch oder optoelektronisch steuerbar Messeinheit handeln, welche insbesondere über einen Computer, einen Mikrocomputer oder einen programmierbaren Chip, z.B. eine anwendungsspezifische integrierte Schaltung (engl. *application-specific integrated circuit;* ASIC) oder ein FPGA (engl. *field-programmable gate Array),* verfügen kann, wobei die Messeinrichtung auf ein oder mehrere Computerprogramme, welche zur Durchführung der hierin beschriebenen Verfahren eingerichtet sein können, zugreifen kann. Andere Ausgestaltungen der Auswerteeinheit sind jedoch möglich, bevorzugt eine Integration der Auswerteeinheit in die vorgeschlagene Vorrichtung oder das vorgeschlagene System.

Das System zur optischen Vermessung einer Brille kann somit eine feststehende Primäranordnung und eine drehbare Sekundäranordnung umfassen, wobei die Primäranordnung zumindest die Auswerteeinheit und die Sekundäranordnung zumindest die optische Einheit umfasst und wobei die Primäranordnung und die Sekundäranordnung in einer als Lager ausgeführten Verbindung in einer Lagerebene drehbar miteinander verbunden sind.

In einer besonders bevorzugten Ausgestaltung kann die Energieübertragung von der feststehenden Primäranordnung an die drehbare Sekundäranordnung über eine Einrichtung zur Energiezufuhr an die optische Einheit erfolgen, welcher in der Lagerebene angeordnet ist. Die Einrichtung zur Energiezufuhr an die optische Einheit kann hierbei vorzugsweise einen geteilten Transformator aufweisen, welcher in der Primäranordnung über feste Komponenten und in der Sekundäranordnung über drehbare Komponenten verfügen kann. Andere Arten der Energiezufuhr sind jedoch denkbar.

In einer weiteren besonders bevorzugten Ausgestaltung kann die Datenübertragung von der drehbaren Sekundäranordnung an die feststehende Primäranordnung über eine Einrichtung zur optischen Datenübertragung, die auch als "Transceiver" bezeichnet wird, und welche zur Übermittlung der Messdaten, insbesondere der Rohdaten oder, vorzugsweise, der hieraus erfassten reduzierten Messdaten, an die Auswerteeinheit eingerichtet ist, erfolgen. Hierzu können bevorzugt zwei sich gegenüberstehende Leuchtdioden (engl. *light-emitting diodes,* LEDs) eingesetzt werden, wofür ausgenutzt werden kann, dass eine Leuchtdiode als optischer Sender und/oder als optischer Empfänger beschaltbar ist. Vorzugsweise können hierbei die Messdaten in einem Halbduplexverfahren übertragen werden. Andere Arten von Einrichtungen oder Verfahren zur Datenübertragung sind denkbar.

In einer besonders bevorzugten Ausgestaltung ist die genau eine Vorrichtung in dem System beweglich ausgestaltet oder sind die genau zwei Vorrichtungen in dem System in einem veränderbaren Abstand zueinander angeordnet, wobei die Auswerteeinheit aus einer Bewegung der genau einen Vorrichtung oder des Abstands der genau zwei Vorrichtungen zu einer Bestimmung einer räumlichen Zuordnung der zwei Brillengläser in der Brille eingerichtet ist. Der Begriff der "räumliche Zuordnung der zwei Brillengläser" bezeichnet hierbei eine geometrische Ausrichtung jedes der beiden Brillengläser in Bezug auf das jeweils andere Brillenglas in Bezug auf die Brillenfassung. Die räumliche Zuordnung der zwei Brillengläser kann hierbei insbesondere eine Bestimmung eines Abstands der beiden Brillengläser zueinander, einer Verschiebung der beiden Brillengläser in Bezug auf eine optische Achse der Brille und/oder einer Neigung der beiden Brillengläser zueinander umfassen.

In einem weiteren Aspekt betrifft die vorliegende Erfindung ein Verfahren zur Herstellung einer Brille, welches die folgenden Schritte aufweist:

(i) Bereitstellen von zwei Brillengläsern und einer Brillenfassung, welche zwei gesonderte Aufnahmen für die Brillengläser aufweist;

(ii) optische Vermessung der beiden Aufnahmen für die Brillengläser nach dem obigen Verfahren zur optischen Vermessung der Innenkontur der Brillenfassung;

(iii) Zusammenfügen der zwei Brillengläser und der Brillenfassung,

wobei während Schritt (ii) die optische Einheit in die Innenkontur der Brillenfassung eingeführt wird und gegenüber der Brillenfassung gedreht wird, und wobei eine räumliche Zuordnung der zwei Aufnahmen für die Brillengläser in der Brillenfassung ermittelt wird.

Damit ermöglicht das vorliegende Verfahren zur Herstellung einer Brille vorzugsweise eine gleichzeitig oder direkt aufeinanderfolgende sowohl eine Messung der Innenkonturen jeder der beiden Aufnahmen für die Brillengläser in der Brillenfassung als auch eine räumliche Zuordnung der beiden Aufnahmen. Durch die zeitlich überlappende, bevorzugt parallele Ausführung der optischen Vermessung der beiden Brillenfassungen durch jeweils eine Vorrichtung oder durch dieselbe Vorrichtung, welche von einer ersten Aufnahme in dem Brillenfassungsrahmen zu einer zweiten Aufnahme in dem Brillenfassungsrahmen bewegbar ausgestaltet ist, wobei Positionen einer hierbei ausgeführten Bewegung erfassbar sind, kann eine deutlich schnellere Vermessung der beiden Aufnahmen für die beiden Brillengläser in dem Brillenfassungsrahmen erfolgen und, darüber hinaus, die gewünschte räumliche Zuordnung der beiden Brillengläser in der Brillenfassung ermittelt werden.

Für weitere Einzelheiten in Bezug auf das Verfahren zur Herstellung einer Brille wird daher auf das Verfahren zur optischen Vermessung einer Innenkontur einer Brillenfassung sowie auf das System zur Vermessung einer Brille verwiesen.

Die Vorrichtung und das Verfahren zur optischen Vermessung einer Innenkontur einer Brillenfassung ermöglichen in vorteilhafter Weise eine optische Vermessung einer Innenkontur eines Brillenfassungsrahmens, beispielsweise einer in einer Öffnung eines Brillengestells umlaufenden Nut, mit hoher Auflösung innerhalb einer geringen Zeitdauer und darüber hinaus optional auch die optische Vermessung einer Außenkontur der Brillenfassung. Das System zur optischen Vermessung einer Brille und das Verfahren zur Herstellung einer Brille erlauben eine gleichzeitige oder unmittelbar aufeinanderfolgende optische Vermessung der Innenkonturen von zwei Brillenfassungsrahmen eines Brillengestells mit hoher Auflösung innerhalb einer dadurch weiter verringerten Zeitdauer und unter Ermittlung des gegenseitigen Abstands der beiden Brillengläser in einer Brille. Damit kann das Zentrieren von einzeln gefertigten Brillengläsern in eine ideale Sehachse erheblich erleichtert werden. In Folge kann die Zentriertoleranz derart verringert werden, dass der Brillenträger nunmehr die erwartete und technisch mögliche Korrektur erfahren kann, in dem er die gewünschte Verträglichkeit der Brille spüren kann. Reklamationen aufgrund einer Unverträglichkeit der Brille für den Brillenträger dürften somit deutlich zurückgehen.

Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:

Figur 1    eine schematische Darstellung eines Ausführungsbeispiels einer Vorrichtung zur optischen Vermessung einer Innenkontur einer Brillenfassung;

Figur 2    eine schematische Darstellung einer bevorzugten Ausführungsform einer optischen Einheit aus der Vorrichtung zur optischen Vermessung einer Innenkontur einer Brillenfassung in Aufsicht;

Figur 3    einen Schnitt durch die bevorzugte Ausführungsform der optischen Einheit aus Figur 2;

Figur 4    ein Ablaufdiagramm eines bevorzugten Ausführungsbeispiels eines Verfahrens zur optischen Vermessung einer Innenkontur einer Brillenfassung;

Figur 5    eine schematische Darstellung eines Ausführungsbeispiels eines Systems zur optischen Vermessung einer Brille; und

Figur 6    ein Ablaufdiagramm eines bevorzugten Ausführungsbeispiels eines Verfahrens zur Herstellung einer Brille.

Beschreibung der Ausführungsbeispiele

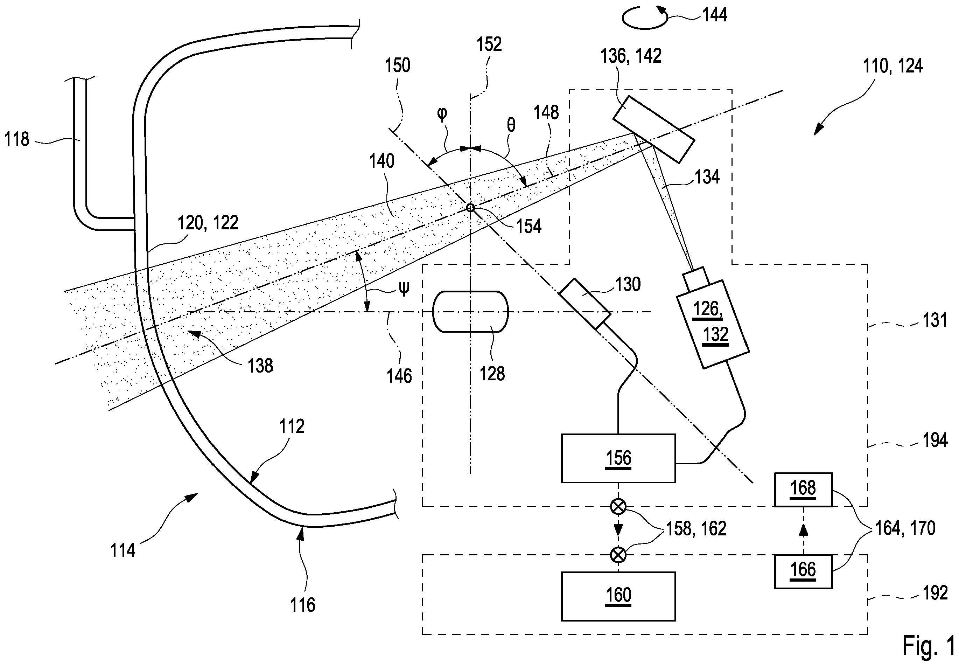

Figur 1 zeigt eine schematische Darstellung eines bevorzugten Ausführungsbeispiels einer Vorrichtung 110 zur optischen Vermessung einer Innenkontur 112 einer Brillenfassung 116 einer Brille 114, von der in Figur 1 jedoch nur ein Ausschnitt dargestellt ist. Weitere mögliche, an der Brillenfassung 116 angebrachte Komponenten wie Brillenbügel 118 und/oder Pads (nicht dargestellt) bleiben bei der optischen Vermessung außer Betracht. Die Brillenfassung 116 ist hierbei insbesondere dazu eingerichtet ist, um zwei gesonderte Brillengläser (nicht dargestellt) aufzunehmen. Hierzu kann die Brillenfassung über einen Brillenfassungsrahmen 120 verfügen, welcher rechts- und linksseitig jeweils eine Aufnahme 122 für je ein Brillenglas aufweisen kann. Hierbei kann jede Aufnahme 122 geschlossen sein und eine im Inneren des Brillenfassungsrahmens 120 umlaufende Nut (nicht dargestellt) aufweisen kann, die zur Aufnahme des Brillenglases eingerichtet sein kann. Die Innenkontur 112 bezeichnet hierbei insbesondere ein Profil der im Inneren des Brillenfassungsrahmens 120 umlaufenden Form. Bevorzugt kann der Brillenfassungsrahmen 120 ein nicht-transparentes Material, insbesondere ein festes, jedoch flexibles und leichtes Material aufweisen. Für den Fall, dass die Brillenfassung 116 ganz oder teilweise transparent ist, können Streuzentren in der Brillenfassung 116 bereitgestellt werden, insbesondere durch vorzugsweise vorübergehendes Aufbringen einer Beschichtung auf die Brillenfassung 116, bevorzugt mittels einer Emulsion und/oder durch Mikropartikel.

Die Vorrichtung 110 umfasst eine optische Einheit 124, welche in der Ausführung gemäß Figur 1 zumindest eine Lichtquelle 126, ein Objektiv 128 und einen optischen Sensor 130 aufweist. Die Lichtquelle 126, das Objektiv 128 und der optische Sensor 130 sind im vorliegenden Ausführungsbeispiel fest zueinander in einem Gehäuse 131 angeordnet, welches zumindest teilweise transparent ausgestaltet sein kann. Vorzugsweise kann ein Laser 132 als die Lichtquelle 126 eingesetzt werden; andere Arten von Lichtquellen, etwa Leuchtdioden, sind ebenfalls möglich. In der in Figur 1 dargestellten Vorrichtung 110 erzeugt der Laser 132 einen Lichtstrahl 134 mit einem geringen Öffnungswinkel von 2° bis 15°, bevorzugt von 5° bis 10°, welcher zunächst ein optisches Umlenkelement 136 beaufschlagt. Das optische Umlenkelement 136 ist hierbei dazu eingerichtet, um eine Richtung des Lichtstrahls 134 derart zu verändern, dass ein Abschnitt 138 der Innenkontur 112 der Brillenfassung 116 mit Licht in Form eines Lichtschnitts 140 beleuchtbar ist, wobei der Lichtschnitt 140 einen schmalen, linienförmigen, mit Licht gefüllten Bereich bezeichnet. Das optische Umlenkelement 136 kann hierbei die Richtung des Lichtstrahls, insbesondere um einen Winkel von 75° bis 105°, wie in Figur 1 dargestellt um 90°, ändern, wobei gleichzeitig auch der Öffnungswinkel auf einen Winkel von 10° bis 30°, bevorzugt von 15° bis 20°, erhöht werden kann. Das optische Umlenkelement 136 kann vorzugsweise ausgewählt sein aus einem Spiegel, einem Prisma, einem Strahlteiler, einem optischen Gitter oder einer optischen Komponente, welche eine Mehrzahl an reflektierenden optischen Elementen aufweisen kann. Im vorliegenden Ausführungsbeispiel umfasst das optische Umlenkelement 136 ein Prisma 142.

Gemäß der vorliegenden Erfindung verfügt die optische Einheit 124 über eine drehbare Lagerung 144 gegenüber der Brillenfassung 116 und ist bestimmungsgemäß, d.h. zum Zweck der optischen Vermessung der Innenkontur 112 der Brillenfassung 116, in die Innenkontur 112 der Brillenfassung 116 einführbar. Hierzu kann die Vorrichtung 110 über eine Dreheinrichtung (nicht dargestellt) verfügen, welche zu einer Drehung der gesamten optischen Einheit 124 eingerichtet sein kann. Auf diese Weise kann durch eine Bewegung der optischen Einheit 124 der Lichtschnitt 140 nach und nach über die zu vermessende Aufnahme 122 des Brillenfassungsrahmens 120 bewegt werden, wodurch es ermöglicht wird, zeitlich aufeinanderfolgend jeweils einen weiteren Abschnitt 138 der Innenkontur 112 mit demselben Lichtschnitt 140 zu beleuchten, um so weitere Teile der Form der Innenkontur 112, insbesondere über den gesamten Brillenfassungsrahmen 120, optisch vermessen zu können. Der Abschnitt 138 der Innenkontur 112, welche von dem Lichtschnitt beaufschlagt wird, kann hierbei einen festgelegten Teil der Innenkontur 112 umfassen, insbesondere einen festgelegten Winkelbereich, bevorzugt von 0,1° bis 10°, besonders bevorzugt von 0,25° bis 2,5°, insbesondere von 0,5° bis 2°, der Innenkontur der Brillenfassung 116.

Die zu vermessende Brillenfassung 116 kann durch eine Halteeinrichtung (nicht dargestellt) aufgenommen sein, wobei die Halteeinrichtung vorzugsweise an die Form der betreffenden Brillenfassung 116 angepasst sein kann. Die Brillenfassung 116 kann hierbei lösbar an der Halteeinrichtung befestigbar sein, vorzugsweise durch eine mechanische Einrastung, eine magnetische Befestigung oder eine lösbare Verklebung; andere Arten der Befestigung sind jedoch möglich.

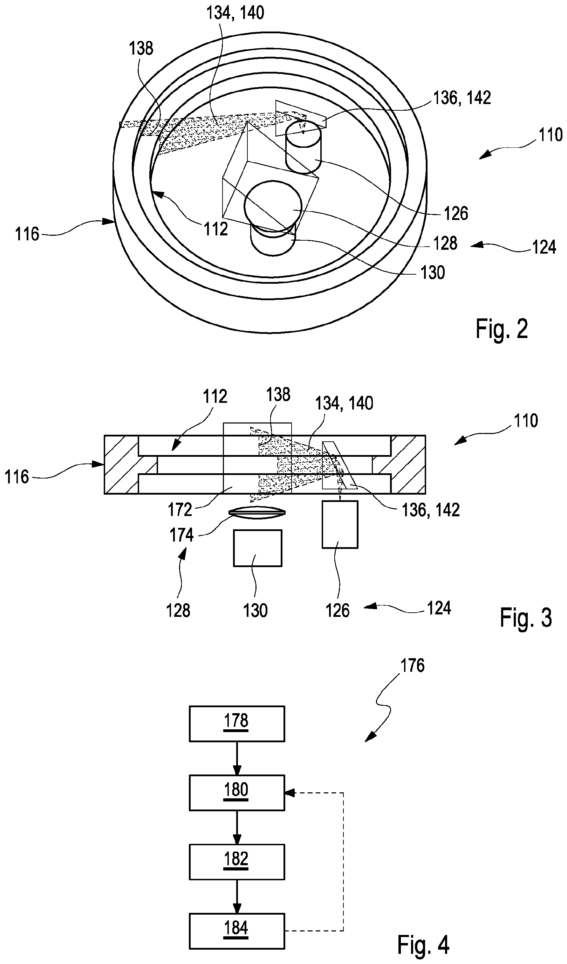

In Folge der Beleuchtung durch den Lichtschnitt 140 reflektiert der betreffende Abschnitt 138 der Innenkontur 112 einen Teil des ihn beaufschlagenden Laserlichts. Das Objektiv 128, welches über eine optische Achse 146 verfügt, kann ein einzelnes Bild des beleuchteten Abschnitts 138 der Innenkontur 112 auf dem optischen Sensor 130 erzeugen. Ein bevorzugtes Ausführungsbeispiel für das Objektiv 128 findet sich unten in Figur 3. Der optische Sensor 130 stellt eine optische Detektoreinheit dar, welche abhängig von der Beaufschlagung einer optisch empfindlichen Sensorfläche des optischen Sensors 130 mit dem Laserlicht, eine elektrische Größe, insbesondere eine elektrische Spannung oder einen elektrischen Strom, als Messwert erzeugen kann, welche als Eingangsgröße zur weiteren Verarbeitung in einem Algorithmus dienen kann. Der optische Sensor 130 kann vorzugsweise in Form einer Sensormatrix, umfassen eine Mehrzahl an einzeln auslesbaren Sensorpixeln, bereitgestellt werden. In einer besonders bevorzugten Ausführung kann der optische Sensor 130 einen geringen Durchmesser von 5 mm bis 25 mm, insbesondere von lediglich 10 mm bis 20 mm, aufweisen. Der optische Sensor 130 kann bevorzugt eine CCD-Sensormatrix umfassen; andere Arten von optischen Sensoren 130 sind jedoch möglich.

Die Lichtquelle 126, der beleuchtbare Abschnitt 138 der Innenkontur 112, das Objektiv 128 und der optische Sensor 130 sind auf eine bestimmte Art und Weise zueinander angeordnet. Wie in Figur 1 schematisch dargestellt, ist der von Lichtquelle 126 erzeugbare Lichtschnitt 140 in eine objektseitige Schärfeebene 148 legbar, während der optische Sensor 130 in einer bildseitigen Schärfeebene 150 anordenbar ist, welche weder parallel zueinander noch jeweils parallel zu einer Objektivebene 152 angeordnet sein kann, wobei die Objektivebene 152 senkrecht zur optischen Achse 146 des Objektivs 128 stehen kann. Vielmehr kann ein Winkel $\theta$ zwischen der objektseitige Schärfeebene 148 und der Objektivebene 152 auf einen Wert von 60° bis 85°, hier etwa 70°, einstellbar und ein Winkel $\varphi$ zwischen der Objektivebene 152 und der bildseitigen Schärfeebene 150 auf einen Wert 15° bis 75°, hier ca. 40°, einstellbar sein. Damit kann ein Winkel $\psi$ zwischen der objektseitige Schärfeebene 148 und der optischen Achse 146 des Objektivs 128 einen Wert von 5° bis 30°, hier etwa 20°, annehmen. Wie weiterhin aus Figur 1 hervorgeht, schneiden sich die objektseitige Schärfeebene 140, die Objektivebene 152 und die bildseitige Schärfeebene 150 in einer gemeinsamen Gerade, von welcher die Darstellung in Figur 1 genau einen Punkt 154 zeigt.

In der besonders bevorzugten Ausführung gemäß Figur 1 kann die Vorrichtung 110 weiterhin über eine Einrichtung 156 zur Datenreduktion und über eine Einrichtung 158 zur optischen Datenübertragung (Transceiver) verfügen. Hierbei kann die Einrichtung 156 zur Datenreduktion vorzugsweise einen FPGA (engl. *field-programmable gate Array*) aufweisen, welcher zu einer Verringerung eines Umfangs an von dem optischen Sensor 130 erzeugten Messdaten eingerichtet sein. Beispielsweise kann hierdurch ein Umfang an Sensordaten von ca. 250 MBaud auf eine Anzahl von ca. 1 MBaud verringert werden, um so eine Datenübertragung durch die Einrichtung 158 zur optischen Datenübertragung zu ermöglichen. Die Einrichtung 156 zur Datenreduktion, die Einrichtung 158 zur optischen Datenübertragung und der optische Sensor 130 können hierbei als eine gemeinsame Einrichtung ausgeführt sein. Die Einrichtung 158 zur optischen Datenübertragung kann zur Übermittlung der Messdaten, insbesondere nach erfolgter Datenreduktion an eine Auswerteinheit 160 eingerichtet sein. Hierzu können bevorzugt zwei sich gegenüberstehende Leuchtdioden 162 (engl. *light-emitting diodes,* LEDs) als optischer Sender und als optischer Empfänger dienen, wobei die Daten vorzugsweise in einem Halbduplexverfahren übertragen werden können. Andere Arten von Einrichtungen oder Verfahren zur Datenübertragung sind jedoch denkbar.

Grundsätzlich kann die Vorrichtung 110 in Bezug auf ihre Energieversorgung autark ausgestaltet sein und hierzu insbesondere über einer Energiespeichereinheit, bevorzugt eine Batterie, verfügen. In der besonders bevorzugten Ausführung gemäß Figur 1 kann jedoch weiterhin eine Einrichtung 164 zur Energiezufuhr an die Vorrichtung 110 vorgesehen sein. Die Einrichtung 164 zur Energiezufuhr kann hierbei einerseits feste Komponenten 166 und andererseits drehbare Komponenten 168 aufweisen und vorzugsweise in Form eines geteilten Transformators 170 ausgeführt sein. Andere Ausführungen sind jedoch möglich.

In Figur 2 findet sich eine schematische Darstellung einer bevorzugten Ausführungsform der optischen Einheit 124 in Aufsicht, während Figur 3 einen Schnitt durch dieselbe bevorzugte Ausführungsform der optischen Einheit 124 zeigt. Hierbei umfasst das Objektiv 128 ein umlenkendes Element in Form eines weiteren Prismas 172 sowie ein fokussierendes Element in Form einer Linse 174. Für weitere Einzelheiten wird auf die Beschreibung der optischen Einheit 124 zu Figur 1 verwiesen.

Figur 4 zeigt ein Ablaufdiagramm eines bevorzugten Ausführungsbeispiels eines Verfahrens 176 zur optischen Vermessung einer Komponente 112 einer Brille 114. In einem Bereitstellungsschritt 178 erfolgt hierbei gemäß Schritt a) ein Bereitstellen der Brillenfassung 116 und der Vorrichtung 110 zur optischen Vermessung der Innenkontur der Brillenfassung, wobei die Vorrichtung 110 die optische Einheit 124 umfasst, welche zur Erfassung eines von dem beleuchteten Abschnitt 138 der Innenkontur 112 der Brillenfassung 116 reflektierten Lichts eingerichtet ist. In einem Beleuchtungsschritt 180 gemäß Schritt b) wird zumindest der vorgesehene Abschnitt 138 der Innenkontur 112 der Brillenfassung 116 mittels des von der Lichtquelle 126 erzeugten Lichtschnittes 140 beleuchtet, wobei das optische Umlenkelement 136 den von der Lichtquelle 126 erzeugten Lichtschnitt 140 auf den zu beleuchtenden Abschnitt 138 der Innenkontur 112 richtet. In einem Abbildungs- schritt 182 erfolgt gemäß Schritt c) ein Abbilden des beleuchteten Abschnitts 138 der Innenkontur 112 mittels des Objektivs 128 auf dem optischen Sensor 130. In einem Messschritt 184 wird gemäß Schritt d) mindestens eine Eigenschaft des von dem beleuchten Abschnitt 138 der Innenkontur 112 reflektierten Lichts mittels des optischen Sensors 130 messtechnisch erfasst. Um eine gesamte Innenkontur oder Außenkontur der Komponente 112 der Brille 114 zu vermessen, kann der Beleuchtungsschritt 180 gemäß Schritt b) erneut durchgeführt werden, wobei ein weiterer Abschnitt 138 der Innenkontur 112 mittels des von der Lichtquelle 126 erzeugten Lichtschnittes 140 beleuchtet wird. Dies erfolgt erfindungsgemäß durch eine Drehung der drehbaren Lagerung 144 der optischen Einheit 124. Für weitere Einzelheiten und Alternativen wird auf die obige Beschreibung von Figur 1 verwiesen.

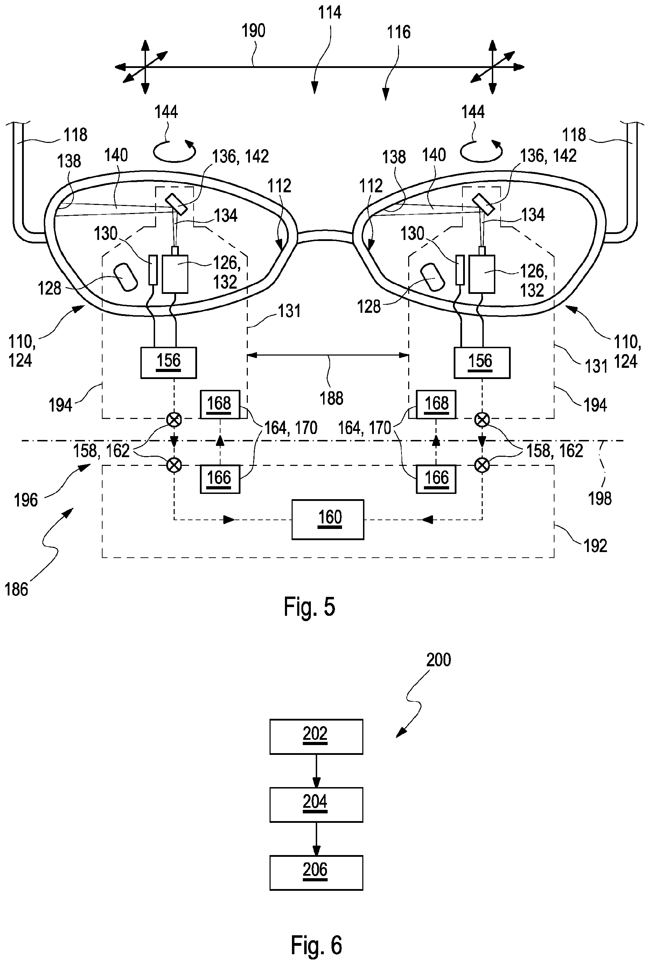

Figur 5 zeigt eine schematische Darstellung eines Ausführungsbeispiels eines Systems 186 zur optischen Vermessung einer Brille 114. Wie aus Figur 5 hervorgeht, umfasst das hier dargestellte beispielhafte System 186 genau zwei der Vorrichtungen 110 zur optischen Vermessung jeweils einer der Innenkonturen 112 der Brillenfassung 116, welche jeweils die mit einer drehbaren Lagerung 144 versehene optische Einheit 124 umfasst, welche jeweils in eine der beiden Aufnahme der Brillenfassung 116 einführbar ist, sowie die Auswerteeinheit 160, welche die jeweilige Auswertung der von den beiden Vorrichtungen 110 erfassten Daten gemeinsam übernimmt. Die genau zwei Vorrichtungen 110 sind in diesem bevorzugten Ausführungsbeispiel in einem veränderbaren Abstand 188 zueinander angeordnet. Die Auswerteeinheit 160 ist hierbei insbesondere zu einer Bestimmung einer räumlichen Zuordnung 190 der beiden Brillengläser eingerichtet.

Alternativ kann das System 186 auch nur über genau eine der Vorrichtungen 110 zur optischen Vermessung jeweils einer der Innenkonturen 112 der Brillenfassung 116 aufweisen (nicht dargestellt), welche die mit einer drehbaren Lagerung 144 versehene optische Einheit 124 umfasst, wobei das genau eine System 186 zunächst in eine erste Aufnahme der Brillenfassung 116 und hieran anschließend in eine zweite Aufnahme der Brillenfassung 116 einführbar ist, wobei auch hier der Abstand 188 veränderbar ist, um die Vermessung der beiden Innenkonturen 112 der Brillenfassung 116 zu ermöglichen. Auch hier kann die Auswerteeinheit 160 die Bestimmung einer räumlichen Zuordnung 190 der beiden Brillengläser aufgrund einer bekannten Bewegung der genau einen Vorrichtung 110 von der ersten Aufnahme zu der zweiten Aufnahme der Brillenfassung 116 vornehmen.

Wie Figur 5 weiterhin zeigt, ist die Auswerteeinheit 160 als gesonderte Einrichtung in Bezug auf die Vorrichtung 110 und insbesondere die davon umfasste optischen Einheit 124 ausgeführt und insbesondere fest gegenüber der drehbar gelagerten optischen Einheit 124 angeordnet. Das System 186 kann somit eine feststehende Primäranordnung 192 und eine drehbare Sekundäranordnung 194 umfassen, wobei die Primäranordnung 192 zumindest die Auswerteeinheit 160 und die Sekundäranordnung zumindest die optische Einheit 124 umfassen kann. Die Primäranordnung 192 und die Sekundäranordnung 194 können hierbei insbesondere in einer als Lager 196 ausgestalteten Verbindung drehbar miteinander verbunden sein, wodurch eine Lagerebene 198 festgelegt werden kann. Hierbei können sowohl die Einrichtung zur Energiezufuhr an die optische Einheit als auch die Einrichtung zur Energieübertragung in Bezug auf die Lagerebene 198 angeordnet werden.

Für weitere Einzelheiten in Bezug auf die Darstellung in Figur 5 wird auf die obige Beschreibung zur Figur 1 verwiesen.

Figur 6 zeigt ein Ablaufdiagramm eines bevorzugten Ausführungsbeispiels eines Verfahrens 200 zur Herstellung einer Brille 114. In einem Bereitstellungsschritt 202 gemäß Schritt (i) werden hier zwei Brillengläser und eine Brillenfassung 116 bereitgestellt, wobei die Brillenfassung zwei Aufnahmen 122 für die Brillengläser aufweist. In einem Vermessungsschritt 204 erfolgt gemäß Schritt (ii) hieran anschließend eine gleichzeitige oder unmittelbar aufeinanderfolgende optische Vermessung der der beiden Aufnahmen 122 gemäß dem Verfahren 176 zur optischen Vermessung einer Komponente 112 einer Brille 114. Schließlich werden in einem Fügeschritt 206 gemäß Schritt (iii) die zwei Brillengläser und die Brillenfassung 116 zusammengefügt. Dieses Verfahren 200 zur Herstellung einer Brille 114 ermöglicht es insbesondere, dass aus der gleichzeitigen oder unmittelbar aufeinanderfolgenden optischen Vermessung der beiden Aufnahmen 122 eine räumliche Zuordnung der beiden Brillengläser festgelegt werden kann.

Bezugszeichenliste

| 110 | Vorrichtung |
| 112 | Innenkontur |
| 114 | Brille |
| 116 | Brillenfassung |
| 118 | Brillenbügel |
| 120 | Brillenfassungsrahmen |
| 122 | Aufnahme |
| 124 | optische Einheit |
| 126 | Lichtquelle |
| 128 | Objektiv |
| 130 | optischer Sensor |
| 131 | Gehäuse |
| 132 | Laser |
| 134 | Lichtstrahl |
| 136 | optisches Umlenkelement |
| 138 | (beleuchtbarer) Abschnitt der Komponente |
| 140 | Lichtschnitt |
| 142 | Prisma |
| 144 | drehbare Lagerung |
| 146 | optische Achse des Objektivs |
| 148 | objektseitige Schärfeebene |
| 150 | bildseitige Schärfeebene |
| 152 | Objektivebene |
| 154 | Punkt der gemeinsamen Gerade |
| 156 | Einrichtung zur Datenreduktion |
| 158 | Einrichtung zur optischen Datenübertragung |
| 160 | Auswerteeinheit |
| 162 | Leuchtdiode |
| 164 | Einrichtung zur Energiezufuhr |
| 166 | feste Komponenten |
| 168 | drehbare Komponenten |
| 170 | geteilter Transformator |
| 172 | Prisma |
| 174 | Linse |
| 176 | Verfahren zur optischen Vermessung einer Komponente einer Brille |
| 178 | Bereitstellungsschritt |
| 180 | Beleuchtungsschritt |
| 182 | Abbildungsschritt |
| 184 | Messschritt |
| 186 | System zur optischen Vermessung einer Brille |
| 188 | veränderbarer Abstand |
| 190 | räumliche Zuordnung zweier Brillengläser |
| 192 | Primäranordnung |
| 194 | Sekundaranordnung |
| 196 | Lager |
| 198 | Lagerebene |
| 200 | Verfahren zur Herstellung einer Brille |
| 202 | Bereitstellungsschritt |

204 Vermessungsschritt
206 Fügeschritt

**Patentansprüche**

1. Vorrichtung (110) zur optischen Vermessung einer Innenkontur (112) einer Brillenfassung (116), wobei die Vorrichtung (110) eine optische Einheit (124) umfasst, welche zur Erfassung eines von einem beleuchteten Abschnitt (138) der Innenkontur (112) der Brillenfassung (116) reflektierten Lichts eingerichtet ist, wobei die optische Einheit (124) in die Innenkontur (112) der Brillenfassung (116) einführbar ist und bei bestimmungsgemäßer Einführung in die Innenkontur (112) der Brillenfassung (116) gegenüber der Brillenfassung (116) drehbar gelagert ist, wobei die optische Einheit (124) zumindest eine Lichtquelle (126), ein Objektiv (128) und mindestens einen optischen Sensor (130) aufweist, wobei die Lichtquelle (126) zur Erzeugung eines Lichtschnittes (140) eingerichtet ist, wobei zumindest ein Abschnitt (138) der Innenkontur (112) mittels des Lichtschnittes (140) beleuchtbar ist, wobei das Objektiv (128) zur Abbildung des beleuchteten Abschnitts (138) der Innenkontur (112) auf den optischen Sensor (130) eingerichtet ist, und wobei der optische Sensor (130) zur Erfassung des von dem beleuchteten Abschnitt (138) der Innenkontur (112) reflektierten Lichts eingerichtet ist, wobei die Lichtquelle (126), der beleuchtbare Abschnitt (138) der Innenkontur (112), das Objektiv (128) und der optische Sensor (130) derart zueinander angeordnet sind, dass der von dem Lichtschnitt (140) beleuchtbare Abschnitt (138) der Innenkontur (112) in eine objektseitige Schärfeebene (148) legbar ist und dass der optische Sensor (130) in einer bildseitigen Schärfeebene (150) anordenbar ist, wobei sich die objektseitige Schärfeebene (148), eine Objektivebene (152) und die bildseitige Schärfeebene (150) in einer gemeinsamen Geraden schneiden, wobei die optische Einheit (124) weiterhin mindestens ein optisches Umlenkelement (136) aufweist, wobei das optische Umlenkelement (136) dazu eingerichtet ist, um den von der Lichtquelle (126) erzeugten Lichtschnitt (140) auf den zu beleuchtenden Abschnitt (138) der Innenkontur (112) zu richten.

2. Vorrichtung (110) nach Anspruch 1, **dadurch gekennzeichnet, dass** das optische Umlenkelement (136) ausgewählt ist aus einem Spiegel, einem Prisma (142), einem Strahlteiler, einem optischen Gitter oder einer optischen Komponente, welche eine Mehrzahl an reflektierenden optischen Elementen aufweist.

3. Vorrichtung (110) nach einem der Ansprüche 1 oder 2, **dadurch gekennzeichnet, dass** das optische Umlenkelement (136) beweglich ausgestaltet ist, dass mindestens zwei gesonderte Abschnitte (138) der Innenkontur (112) mittels des Lichtschnittes (140) beleuchtbar sind.

4. Vorrichtung (110) nach einem der Ansprüche 1 bis 3, **dadurch gekennzeichnet, dass** die optische Einheit (124) weiterhin zur Erfassung von Messdaten eingerichtet ist, wobei erfasste Messdaten auf der Erfassung des von dem beleuchteten Abschnitt (138) der Innenkontur (112) der Brillenfassung (116) reflektierten Lichts beruhen.

5. Vorrichtung (110) nach Anspruch 4, **dadurch gekennzeichnet, dass** die optische Einheit (124) ferner eine Einrichtung (156) zur Datenreduktion umfasst, wobei die Einrichtung (156) zur Datenreduktion zur Verringerung eines Umfangs an den erfassten Messdaten eingerichtet ist.

6. Vorrichtung (110) nach Anspruch 5, **dadurch gekennzeichnet, dass** die Einrichtung zur Datenreduktion (156) eine Verstärkungsregelung aufweist, wobei die Verstärkungsregelung dazu eingerichtet ist, um Helligkeitsschwankungen des reflektierten Lichts, die sich auf die erfassten Messdaten auswirken, auszugleichen.

7. Vorrichtung (110) nach einem der Ansprüche 4 bis 6, **dadurch gekennzeichnet, dass** die optische Einheit (124) eine Einrichtung (158) zur optischen Datenübertragung umfasst, wobei die Einrichtung (158) zur optischen Datenübertragung zur Übermittlung der von der optischen Einheit (124) erfassten Messdaten an eine Auswerteeinheit (160) eingerichtet ist.

8. Vorrichtung (110) nach einem der Ansprüche 1 bis 7, **dadurch gekennzeichnet, dass** die optische Einheit (124) derart um einen Winkel drehbar ist, das mindestens zwei gesonderte Abschnitte (138) der Innenkontur (112) mittels des Lichtschnittes (140) beleuchtbar sind, wobei der optische Sensor (130) zur Aufnahme eines Bildes des jeweils beleuchteten Abschnitts (138) der Innenkontur (112) eingerichtet ist.

9. Vorrichtung (110) nach einem der Ansprüche 8, **dadurch gekennzeichnet, dass** die optische Einheit (124) ferner eine Einrichtung zur Bestimmung eines Wertes für den Winkel aufweist, um den die optische Einheit (124) drehbar ist.

**10.** Verfahren (176) zur optischen Vermessung einer Innenkontur (112) einer Brillenfassung (116), umfassend die Schritte:

a) Bereitstellen einer Brillenfassung (116) und einer Vorrichtung (110) zur optischen Vermessung einer Innenkontur (112) der Brillenfassung (116), wobei die Vorrichtung (110) eine optische Einheit (124) umfasst, welche zur Erfassung eines von einem beleuchteten Abschnitt (138) der Innenkontur (112) der Brillenfassung (116) reflektierten Lichts eingerichtet ist;
b) Beleuchten zumindest eines Abschnitts (138) der Innenkontur (112) der Brillenfassung (116);
c) Abbilden des beleuchteten Abschnitts (138) der Innenkontur (112); und
d) Erfassen eines von dem beleuchten Abschnitt (138) der Innenkontur (112) reflektierten Lichts,

wobei die optische Einheit (124) in die Innenkontur (112) der Brillenfassung (116) eingeführt wird und gegenüber der Brillenfassung (116) gedreht wird, wobei die optische Einheit (124) zumindest eine Lichtquelle (126), ein Objektiv (128) und mindestens einen optischen Sensor (130) aufweist, wobei der zumindest eine Abschnitt (138) der Innenkontur (112) der Brillenfassung (116) mittels eines von der Lichtquelle (126) erzeugten Lichtschnittes (140) beleuchtet wird, wobei der beleuchtete Abschnitts (138) der Innenkontur (112) mittels des Objektivs (128) auf dem optischen Sensor (130) abgebildet wird, und wobei das von dem beleuchten Abschnitt (138) der Innenkontur (112) reflektierte Licht mittels des optischen Sensors (130) erfasst wird, wobei die Lichtquelle (126), der beleuchtete Abschnitt (138) der Innenkontur (112), das Objektiv (128) und der optische Sensor (130) derart zueinander angeordnet werden, dass der von dem Lichtschnitt (140) beleuchtete Abschnitt (138) der Innenkontur (112) in eine objektseitige Schärfeebene (148) gelegt wird und dass der optische Sensor (130) in einer bildseitigen Schärfeebene (150) angeordnet wird, wobei sich die objektseitige Schärfeebene (148), eine Objektivebene (152) und die bildseitige Schärfeebene (150) in einer gemeinsamen Geraden schneiden, wobei die optische Einheit (124) weiterhin mindestens ein optisches Umlenkelement (136) aufweist, wobei das optische Umlenkelement (136) den von der Lichtquelle (126) erzeugten Lichtschnitt (140) auf den zu beleuchtenden Abschnitt (138) der Innenkontur (112) richtet.

**11.** System (186) zur optischen Vermessung einer Brille (114), umfassend mindestens eine Vorrichtung (110) zur optischen Vermessung jeweils einer Innenkontur (112) einer Brillenfassung (116) gemäß einem der Ansprüche 1 bis 9 und eine Auswerteeinheit (160), wobei die Auswerteeinheit (160) zur einer Bestimmung einer räumlichen Zuordnung (190) der zwei Brillengläser in der Brillenfassung (116) eingerichtet ist.

**12.** , System (186) nach Anspruch 11, **dadurch gekennzeichnet, dass** das System (186) genau zwei Vorrichtungen (110) zur optischen Vermessung umfasst, wobei die genau zwei Vorrichtungen (110) in einem veränderbaren Abstand (188) zueinander angeordnet sind.

**13.** System (186) nach Anspruch 12, **dadurch gekennzeichnet, dass** der Abstand (188) der beiden Vorrichtungen (110) in Bezug auf einen vorgebbaren Abstand für die Brillengläser einstellbar ist.

**14.** Verfahren (200) zur Herstellung einer Brille (114), mit den Schritten:

(i) Bereitstellen von zwei Brillengläsern und einer Brillenfassung (116), welche zwei gesonderte Aufnahmen (122) für die Brillengläser aufweist;
(ii) optische Vermessung der beiden Aufnahmen (122) für die Brillengläser nach dem Verfahren (176) zur optischen Vermessung der Innenkontur (112) der Brillenfassung (116) gemäß Anspruch 10;
(iii) Zusammenfügen der zwei Brillengläser und der Brillenfassung (116),

wobei während Schritt (ii) die optische Einheit (124) in die Innenkontur (112) der Brillenfassung (116) eingeführt wird und gegenüber der Brillenfassung (116) gedreht wird, und wobei eine räumliche Zuordnung (190) der zwei Brillengläser in der Brillenfassung (116) ermittelt wird.

**15.** Verfahren (200) nach Anspruch 14, **dadurch gekennzeichnet, dass** eine Ermittlung der räumlichen Zuordnung (190) der zwei Brillengläser in der Brillenfassung (116) durch Bestimmen eines Abstands der beiden Brillengläser zueinander, einer Verschiebung der beiden Brillengläser in Bezug auf eine optische Achse der Brille (114) und/oder eine Neigung der beiden Brillengläser zueinander erfolgt.

**EP 3 899 424 B1**

**Claims**

1. An apparatus (110) for an optical measurement of an inner contour (112) of a spectacle frame (116), wherein the apparatus (110) comprises an optical unit (124) which is configured to capture light reflected from an illuminated section (138) of the inner contour (112) of the spectacle frame (116), wherein the optical unit (124) is insertable into the inner contour (112) of the spectacle frame (116) and, when inserted into the inner contour (112) of the spectacle frame (116) as intended, is mounted so as to be rotatable relative to the spectacle frame (116), wherein the optical unit (124) comprises at least one light source (126), an objective (128), and at least one optical sensor (130), wherein the light source (126) is configured to generate a light section (140), wherein at least one section (138) of the inner contour (112) is able to be illuminated by means of the light section (140), wherein the objective (128) is configured to image the illuminated section (138) of the inner contour (112) onto the optical sensor (130), and wherein the optical sensor (130) is configured to capture the light reflected by the illuminated section (138) of the inner contour (112), wherein the light source (126), the section (138) of the inner contour (112) that is able to be illuminated, the objective (128), and the optical sensor (130) are arranged relative to one another in such a manner that the section (138) of the inner contour (112) that is able to be illuminated by the light section (140) is placeable into an object-side plane of focus (148) and that the optical sensor (130) is arrangeable in an image-side plane of focus (150), wherein the object-side plane of focus (148), an objective plane (152), and the image-side plane of focus (150) intersect in a common straight line, wherein the optical unit (124) furthermore comprises at least one optical deflection element (136), wherein the optical deflection element (136) is configured to direct the light section (140) generated by the light source (126) at the section (138) of the inner contour (112) to be illuminated.

2. The apparatus (110) according to claim 1, **characterized in that** the optical deflection element (136) is selected from a mirror, a prism (142), a beam splitter, an optical grating, or an optical component having a plurality of reflecting optical elements.

3. The apparatus (110) according to claims 1 or 2, **characterized in that** the optical deflection element (136) has a movable configuration such that at least two separate sections (138) of the inner contour (112) are able to be illuminated by means of the light section (140).

4. The apparatus (110) according to any one of claims 1 to 3, **characterized in that** the optical unit (124) is furthermore configured to capture measurement data, wherein captured measurement data are based on the capture of the light reflected by the illuminated section (138) of the inner contour (112) of the spectacle frame (116).

5. The apparatus (110) according to claim 4, **characterized in that** the optical unit (124) further comprises a device (156) for data reduction, wherein the device (156) for data reduction is configured to reduce a scale of the captured measurement data.

6. The apparatus (110) according to claim 5, **characterized in that** the device for data reduction (156) has a gain control, wherein the gain control is configured to compensate for brightness variations in the reflected light having an effect on the captured measurement data.

7. The apparatus (110) according to any one of claims 4 to 6, **characterized in that** the optical unit (124) comprises a device (158) for optical data transfer, wherein the device (158) for optical data transfer is configured to transmit the measurement data captured by the optical unit (124) to an evaluation unit (160).

8. The apparatus (110) according to any one of claims 1 to 7, **characterized in that** the optical unit (124) is rotatable by an angle in such a manner that at least two separate sections (138) of the inner contour (112) are able to be illuminated by using the light section (140), wherein the optical sensor (130) is configured to record an image of the section (138) of the inner contour (112) illuminated in each case.

9. The apparatus (110) according to claim 8, **characterized in that** the optical unit (124) further comprises a device for determining a value for the angle, by which the optical unit (124) is rotatable.

10. A method (176) for an optical measurement of an inner contour (112) of a spectacle frame (116), comprising the steps of:

   a) providing a spectacle frame (116) and an apparatus (110) for optical measurement of an inner contour (112) of the spectacle frame (116), wherein the apparatus (110) comprises an optical unit (124) which is configured to capture light reflected by an illuminated section (138) of the inner contour (112) of the spectacle frame (116);
b) illuminating at least one section (138) of the inner contour (112) of the spectacle frame (116);
c) imaging the illuminated section (138) of the inner contour (112); and
d) capturing light reflected by the illuminated section (138) of the inner contour (112),

wherein the optical unit (124) is inserted into the inner contour (112) of the spectacle frame (116) and is rotated relative to the spectacle frame (116), wherein the optical unit (124) comprises at least one light source (126), an objective (128), and at least one optical sensor (130), wherein the at least one section (138) of the inner contour (112) of the spectacle frame (116) is illuminated by means of a light section (140) generated by the light source (126), wherein the illuminated section (138) of the inner contour (112) is imaged onto the optical sensor (130) by means of the objective (128), and wherein the light reflected by the illuminated section (138) of the inner contour (112) is captured by means of the optical sensor (130), wherein the light source (126), the illuminated section (138) of the inner contour (112), the objective (128), and the optical sensor (130) are arranged relative to one another in such a manner that the section (138) of the inner contour (112) illuminated by the light section (140) is placed into an object-side plane of focus (148) and that the optical sensor (130) is arranged in an image-side plane of focus (150), wherein the object-side plane of focus (148), an objective plane (152), and the image-side plane of focus (150) intersect in a common straight line, wherein the optical unit (124) furthermore comprises at least one optical deflection element (136), wherein the optical deflection element (136) directs the light section (140) generated by the light source (126) at the section (138) of the inner contour (112) to be illuminated.

11. A system (186) for optical measurement of a pair of spectacle lenses (114), comprising at least one apparatus (110) for an optical measurement of in each case an inner contour (112) of a spectacle frame (116) according to any one of claims 1 to 9 and an evaluation unit (160), wherein the evaluation unit (160) is configured to determine a spatial relationship (190) between the two spectacle lenses in the spectacle frame (116).

12. The system (186) according to claim 11, **characterized in that** the system (186) comprises exactly two apparatuses (110) for an optical measurement, wherein the exactly two apparatuses (110) are arranged having an alterable distance (188) from one another.

13. The system (186) according to claim 12, **characterized in that** the distance (188) between the two apparatuses (110) is adjustable in relation to a specifiable distance for the spectacle lenses.

14. A method (200) for producing a pair of spectacle lenses (114), including the steps of:

(i) providing two spectacle lenses and a spectacle frame (116), which has two separate receptacles (122) for the spectacle lenses;
(ii) optically measuring the two receptacles (122) for the spectacle lenses according to the method (176) for an optical measurement of the inner contour (112) of the spectacle frame (116) according to claim 10;
(iii) assembling the two spectacle lenses and the spectacle frame (116),

wherein, in step (ii), the optical unit (124) is inserted into the inner contour (112) of the spectacle frame (116) and rotated relative to the spectacle frame (116), and wherein a spatial relationship (190) of the two spectacle lenses in the spectacle frame (116) is ascertained.

15. The method (200) according to claim 14, **characterized in that** the spatial relationship (190) of the two spectacle lenses in the spectacle frame (116) is ascertained by determining a distance between the two spectacle lenses, a displacement of the two spectacle lenses in relation to an optical axis of the pair of the spectacle lenses (114), and/or an inclination of the two spectacle lenses with respect to one another.

## Revendications

1. Arrangement (110) pour la mesure optique d'un contour intérieur (112) d'une monture de lunettes (116), l'arrangement (110) comprenant une unité optique (124) qui est conçue pour détecter une lumière réfléchie par une portion éclairée (138) du contour intérieur (112) de la monture de lunettes (116), l'unité optique (124) pouvant être introduite dans le contour intérieur (112) de la monture de lunettes (116) et, lors d'une introduction conforme dans le contour intérieur (112) de la monture de lunettes (116), étant montée rotative par rapport à la monture de lunettes (116), l'unité optique (124) possédant au moins une source de lumière (126), un objectif (128) et au moins un capteur optique (130), la source de lumière (126) étant conçue pour générer une coupe optique (140), au moins une portion (138) du contour intérieur (112) pouvant être éclairée au moyen de la coupe optique (140), l'objectif (128) étant conçu pour représenter la portion (138) éclairée du contour intérieur (112) sur le capteur optique (130), et le capteur optique (130) étant conçu pour détecter la lumière réfléchie par la portion (138) éclairée du contour intérieur (112), la source de lumière (126), la portion (138) pouvant être éclairée du contour intérieur (112), l'objectif (128) et le capteur optique (130) étant disposés les uns par rapport aux autres de telle sorte que la portion (138) du contour intérieur (112) qui peut être éclairée par la coupe optique (140) peut être placée dans un plan de netteté côté objet (148) et que le capteur optique (130) peut être disposé dans un plan de netteté côté image (150), le plan de netteté côté objet (148), un plan d'objectif (152) et le plan de netteté côté image (150) se croisant en une droite commune, l'unité optique (124) possédant en outre au moins un élément de déviation optique (136), l'élément de déviation optique (136) étant conçu pour diriger la coupe optique (140) générée par le source de lumière (126) sur la portion (138) à éclairer du contour intérieur (112).

2. Arrangement (110) selon la revendication 1, **caractérisé en ce que** l'élément de déviation optique (136) est choisi parmi un miroir, un prisme (142), un séparateur de faisceaux, un réseau optique et un composant optique, lequel possède une pluralité d'éléments optiques réfléchissants.

3. Arrangement (110) selon l'une des revendications 1 ou 2, **caractérisé en ce que** l'élément de déviation optique (136) est configuré mobile, **en ce qu'**au moins deux portions (138) du contour intérieur (112) peuvent être éclairées au moyen de la coupe optique (140).

4. Arrangement (110) selon l'une des revendications 1 à 3, **caractérisé en ce que** l'unité optique (124) est en outre conçue pour acquérir des données de mesure, les données de mesure acquises s'appuyant sur la détection de la lumière réfléchie par la portion (138) éclairée du contour intérieur (112) de la monture de lunettes (116).

5. Arrangement (110) selon la revendication 4, **caractérisé en ce que** l'unité optique (124) comporte en outre un dispositif (156) de réduction des données, le dispositif (156) de réduction des données étant conçu pour réduire un volume de données de mesure acquises.

6. Arrangement (110) selon la revendication 5, **caractérisé en ce que** le dispositif (156) de réduction des données possède une régulation du gain, la régulation du gain étant conçue pour compenser les fluctuations de la luminosité de la lumière réfléchie qui agissent sur les données de mesure acquises.

7. Arrangement (110) selon l'une des revendications 4 à 6, **caractérisé en ce que** l'unité optique (124) comporte un dispositif (158) de transmission optique de données, le dispositif (158) de transmission optique de données étant conçu pour communiquer les données de mesure acquises par l'unité optique (124) à une unité d'interprétation (160).

8. Arrangement (110) selon l'une des revendications 1 à 7, **caractérisé en ce que** l'unité optique (124) peut être tournée d'un certain angle de telle sorte qu'au moins deux portions (138) distinctes du contour intérieur (112) peuvent être éclairées au moyen de la coupe optique (140), le capteur optique (130) étant conçu pour enregistrer une image de la portion (138) du contour intérieur (112) respectivement éclairée.

9. Arrangement (110) selon la revendication 8, **caractérisé en ce que** l'unité optique (124) possède en outre un dispositif de détermination d'une valeur pour l'angle duquel peut être tournée l'unité optique (124).

10. Procédé (176) de mesure optique d'un contour intérieur (112) d'une monture de lunettes (116), comprenant les étapes suivantes :

    a) la fourniture d'une monture de lunettes (116) et d'un arrangement (110) de mesure optique d'un contour intérieur (112) de la monture de lunettes (116), l'arrangement (110) comprenant une unité optique (124) qui est conçue pour détecter une lumière réfléchie par une portion éclairée (138) du contour intérieur (112) de la monture de lunettes (116) ;
    b) l'éclairage d'au moins une portion (138) du contour intérieur (112) de la monture de lunettes (116) ;
    c) la représentation de la portion (138) éclairée du contour intérieur (112) ; et
    d) la détection d'une lumière réfléchie par la portion (138) éclairée du contour intérieur (112),

    l'unité optique (124) étant introduite dans le contour intérieur (112) de la monture de lunettes (116) et étant tournée par rapport à la monture de lunettes (116), l'unité optique (124) possédant au moins une source de lumière (126), un objectif (128) et au moins un capteur optique (130), l'au moins une portion (138) du contour intérieur (112) de la monture de lunettes (116) étant éclairée au moyen d'une coupe optique (140) générée par la source de lumière (126), la portion (138) éclairée du contour intérieur (112) étant représentée au moyen de l'objectif (128) sur le capteur optique (130), et la lumière réfléchie par la portion (138) éclairée du contour intérieur (112) étant détectée au moyen du capteur optique (130), la source de lumière (126), la portion (138) éclairée du contour intérieur (112), l'objectif (128) et le capteur optique (130) étant disposés les uns par rapport aux autres de telle sorte que la portion (138) du contour intérieur (112) éclairée par la coupe optique (140) est placée dans un plan de netteté côté objet (148) et que le capteur optique (130) est disposé dans un plan de netteté côté image (150), le plan de netteté côté objet (148), un plan d'objectif (152) et le plan de netteté côté image (150) se croisant en une droite commune, l'unité optique (124) possédant en outre au moins un élément de déviation optique (136), l'élément de déviation optique (136) dirigeant la coupe optique (140) générée par le source de lumière (126) sur la portion (138) à éclairer du contour intérieur (112).

11. Système (186) de mesure optique d'une paire de lunettes (114), comprenant au moins un arrangement (110) pour la mesure optique respectivement d'un contour intérieur (112) d'une monture de lunettes (116) selon l'une des revendications 1 à 9 et une unité d'interprétation (160), l'unité d'interprétation (160) étant conçue pour une détermination d'une affectation dans l'espace (190) des deux verres de lunettes dans la monture de lunettes (116).

12. Système (186) selon la revendication 11, **caractérisé en ce que** le système (186) comporte exactement deux arrangements (110) pour la mesure optique, les exactement deux arrangements (110) étant disposés avec un écart variable (188) l'un par rapport à l'autre.

13. Système (186) selon la revendication 12, **caractérisé en ce que** l'écart (188) entre les deux arrangements (110) est réglable en référence à un écart pouvant être prédéfini pour les verres de lunettes.

14. Procédé (200) de fabrication d'une paire de lunettes (114), comprenant les étapes suivantes :

(i) la fourniture de deux verres de lunettes et d'une monture de lunettes (116), laquelle possède deux logements (122) distincts pour les verres de lunettes ;
(ii) la mesure optique des deux logements (122) pour les verres de lunettes conformément à un procédé (176) de mesure optique d'un contour intérieur (112) de la monture de lunettes (116) selon la revendication 10 ;
(iii) l'assemblage des deux verres de lunettes et de la monture de lunettes (116),

l'unité optique (124) étant introduite dans le contour intérieur (112) de la monture de lunettes (116) pendant l'étape ii) et tournée par rapport à la monture de lunettes (116), et une affectation dans l'espace (190) des deux verres de lunettes dans la monture de lunettes (116) étant identifiée.

15. Procédé (200) selon la revendication 14, **caractérisé en ce qu'**une affectation dans l'espace (190) des deux verres de lunettes dans la monture de lunettes (116) est effectuée par détermination d'un écart des deux verres de lunettes l'un par rapport à l'autre, d'un décalage des deux verres de lunettes en référence à un axe optique de la paire de lunettes (114) et/ou d'une inclinaison des deux verres de lunettes l'un par rapport à l'autre.

Fig. 1

EP 3 899 424 B1

134, 140

138

136, 142

110

116

112

126

128

130

124

**Fig. 2**

112

138

134, 140

110

116

172

136, 142

174

128

130

126

124

**Fig. 3**

176

<u>178</u>

<u>180</u>

<u>182</u>

<u>184</u>

**Fig. 4**

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4224640 C2
- DE 9317381 U1
- DE 19919311 C1
- EP 0671679 B1
- EP 0974038 B1
- DE 102010010340 B4
- DE 102011114048 B4
- US 20130050712 A1
- FR 2713758 A1
- DE 10049382 A1
- DE 19725159 C1
- DE 19721688 A1
- WO 2019026416 A1